(19) Europäisches Patentamt
European Patent Office
Office européen des brevets

(11) **EP 4 776 061 A1**

(12) **EUROPEAN PATENT APPLICATION**

(43) Date of publication:
**15.07.2026 Bulletin 2026/29**

(21) Application number: **26150469.0**

(22) Date of filing: **07.01.2026**

(51) International Patent Classification (IPC):
*G03B 21/00* (2006.01)   *G02F 1/1333* (2006.01)
*G03B 21/16* (2006.01)   *H04N 9/31* (2006.01)
*G02B 7/00* (2021.01)   *H04N 5/74* (2006.01)

(52) Cooperative Patent Classification (CPC):
**G03B 21/16; G02B 7/008; G02F 1/133311;
G02F 1/133382; G02F 1/133385; G03B 21/006;
H04N 9/3105; H04N 9/3144; H04N 9/3188**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.01.2025 JP 2025003372**

(71) Applicant: **Seiko Epson Corporation
Tokyo 160-8801 (JP)**

(72) Inventors:
• **KADOTANI, Norikazu
Suwa-shi, 392-8502 (JP)**
• **NAITO, Yuki
Suwa-shi, 392-8502 (JP)**
• **MIYASHITA, Tomoaki
Suwa-shi, 392-8502 (JP)**

(74) Representative: **Lewis Silkin LLP
Arbor
255 Blackfriars Road
London SE1 9AX (GB)**

(54) **PROJECTOR AND LIGHT MODULATOR**

(57)     A projector includes a light source; and a light modulator configured to modulate light output from the light source. The light modulator includes a liquid crystal layer, a light-incident-side substrate located on a light incident side of the liquid crystal layer, a light-exiting-side substrate located on a light exiting side of the liquid crystal layer, the light-exiting-side substrate and the light-incident-side substrate sandwiching the liquid crystal layer, a light-incident-side dustproof substrate that is a light transmissive substrate and located on a light incident side of the light-incident-side substrate, a light-exiting-side dustproof substrate that is a light transmissive substrate, and located on a light exiting side of the light-exiting-side substrate, the light-exiting-side dustproof substrate and the light-incident-side dustproof substrate sandwiching the liquid crystal layer, the light-incident-side substrate, and the light-exiting-side substrate, and a temperature control unit configured to control a temperature of the liquid crystal layer. A size of the light-incident-side dustproof substrate in a plan view is greater than a size of the light-incident-side substrate in the plan view when viewed from a light incident side of the light modulator. The temperature control unit is in contact with the light-incident-side dustproof substrate.

FIG. 2

# Description

The present application is based on, and claims priority from JP Application Serial Number 2025-003372, filed January 9, 2025, the disclosure of which is hereby incorporated by reference herein in its entirety.

## BACKGROUND

### 1. Technical Field

The present disclosure relates to a projector and a light modulator.

### 2. Related Art

There has been a known temperature adjustment mechanism that heats a liquid crystal panel (see, for example, JP-A-2004-139018).

The temperature adjustment mechanism described in JP-A-2004-139018 includes a light-transmissive temperature applicator and a temperature controller coupled to the temperature applicator.

The temperature applicator is attached to a liquid crystal display element. The liquid crystal display element includes a first substrate and a second substrate facing each other, and a liquid crystal layer interposed between the first substrate and the second substrate, and the temperature applicator is formed at the second substrate. The first substrate is provided with multiple column electrodes in stripes, and the second substrate is provided with multiple row electrodes perpendicular to the column electrodes. Each of the column electrodes and the row electrodes is a display electrode and is configured with a transparent electrically conductive film such as an ITO film.

The light-transmissive temperature applicator is provided, for example, at a surface of the second substrate that is the surface facing the liquid crystal layer. The temperature applicator is configured with an electrically conductive metal oxide thin film. When a predetermined energization signal is input to the metal oxide thin film, a current flows through the thin film, and Joule heat corresponding to the value of the resistance of the thin film is generated. The generated Joule heat can heat the liquid crystal display element.

JP-A-2004-139018 is an example of the related art.

In the temperature adjustment mechanism described in JP-A-2004-139018, however, the temperature applicator is provided in a region of the liquid crystal panel that is a region through which light passes. Although the temperature applicator is configured with a transparent electrically conductive film, the transparent electrically conductive film does not transmit all of the incident light but absorbs part of the light passing therethrough. Therefore, when light passes through the temperature applicator, heat is generated in the temperature applicator, and the temperature of the liquid crystal layer increases accordingly, so that it is difficult to precisely control the temperature of the liquid crystal layer.

It has therefore been desired to provide a configuration capable of precisely controlling the temperature of the liquid crystal layer.

## SUMMARY

A projector according to a first aspect of the present disclosure includes: a light source; and a light modulator configured to modulate light output from the light source. The light modulator includes a liquid crystal layer, a light-incident-side substrate located on a light incident side of the liquid crystal layer, a light-exiting-side substrate located on a light exiting side of the liquid crystal layer, the light-exiting-side substrate and the light-incident-side substrate sandwiching the liquid crystal layer, a light-incident-side dustproof substrate that is a light transmissive substrate and located on a light incident side of the light-incident-side substrate, a light-exiting-side dustproof substrate that is a light transmissive substrate, and located on a light exiting side of the light-exiting-side substrate, the light-exiting-side dustproof substrate and the light-incident-side dustproof substrate sandwiching the liquid crystal layer, the light-incident-side substrate, and the light-exiting-side substrate, and a temperature control unit configured to control a temperature of the liquid crystal layer. A size of the light-incident-side dustproof substrate in a plan view is greater than a size of the light-incident-side substrate in the plan view when viewed from a light incident side of the light modulator. The temperature control unit is in contact with the light-incident-side dustproof substrate.

A light modulator according to a second aspect of the present disclosure includes: a liquid crystal layer; a light-incident-side substrate located on a light incident side of the liquid crystal layer; a light-exiting-side substrate located on a light exiting side of the liquid crystal layer, the light-exiting-side substrate and the light-incident-side substrate sandwiching the liquid crystal layer; a light-incident-side dustproof substrate that is a light transmissive substrate and located on a light incident side of the light-incident-side substrate; a light-exiting-side dustproof substrate that is a light transmissive substrate, and located on a light exiting side of the light-exiting-side substrate, the light-exiting-side dustproof substrate and the light-incident-side dustproof substrate sandwiching the liquid crystal layer, the light-incident-side substrate, and the light-exiting-side substrate; and a temperature control unit configured to control a temperature of the liquid crystal layer. A size of the light-incident-side dustproof substrate in a plan view is greater than a size of the light-incident-side substrate in the plan view. The temperature control unit is in contact with the light-incident-side dustproof substrate.

## BRIEF DESCRIPTION OF THE DRAWINGS

FIG. 1 is a diagrammatic view showing a schematic configuration of a projector in a first embodiment.
FIG. 2 is a perspective view showing a portion of an image formation apparatus in the first embodiment.
FIG. 3 is a perspective view showing a portion of the image formation apparatus in the first embodiment.
FIG. 4 is a perspective view showing a panel module in the first embodiment.
FIG. 5 is a perspective view showing the panel module in the first embodiment.
FIG. 6 is an exploded perspective view showing the panel module in the first embodiment.
FIG. 7 is an exploded perspective view showing the panel module in the first embodiment.
FIG. 8 is a cross-sectional view showing the panel module in the first embodiment.
FIG. 9 is a perspective view showing a portion of the image forming apparatus in a state in which a light modulator is separated from a support member in the first embodiment.
FIG. 10 shows an optical path changer in the first embodiment.
FIG. 11 illustrates the optical path shifted by the optical path changer in the first embodiment.
FIG. 12 shows the positional relationship between a heating element and actuators viewed from a blue light incident side in the first embodiment.
FIG. 13 shows the positional relationship between the heating element and the actuators viewed from a red light incident side in the first embodiment.
FIG. 14 shows the positional relationship between the heating element and the actuators viewed from the light exiting side of the optical path changer in the first embodiment.
FIG. 15 is a perspective view showing a portion of the image formation apparatus and the entirety of a cooling apparatus in the first embodiment.
FIG. 16 is an exploded perspective view showing the cooling apparatus in the first embodiment.
FIG. 17 is a cross-sectional view showing a heat transfer frame and a light-incident-side dustproof substrate in the first embodiment.
FIG. 18 is a block diagram showing the configuration of a control apparatus in the first embodiment.
FIG. 19 shows the position of a temperature sensor in a liquid crystal panel in the first embodiment.
FIG. 20 is a flowchart showing a control process in the first embodiment.
FIG. 21 is a perspective view showing an image formation apparatus provided in a projector according to a second embodiment.
FIG. 22 shows an optical path changer in the second embodiment.
FIG. 23 illustrates the optical path shifted by the optical path changer in the second embodiment.
FIG. 24 shows the positional relationship between a heating element and an actuator viewed from a blue light incident side in the second embodiment.
FIG. 25 shows the positional relationship between the heating element and the actuator viewed from the light exiting side of the optical path changer in the second embodiment.

## DESCRIPTION OF EMBODIMENTS

### First embodiment

A first embodiment of the present disclosure will be described below with reference to the drawings.

### Schematic configuration of projector

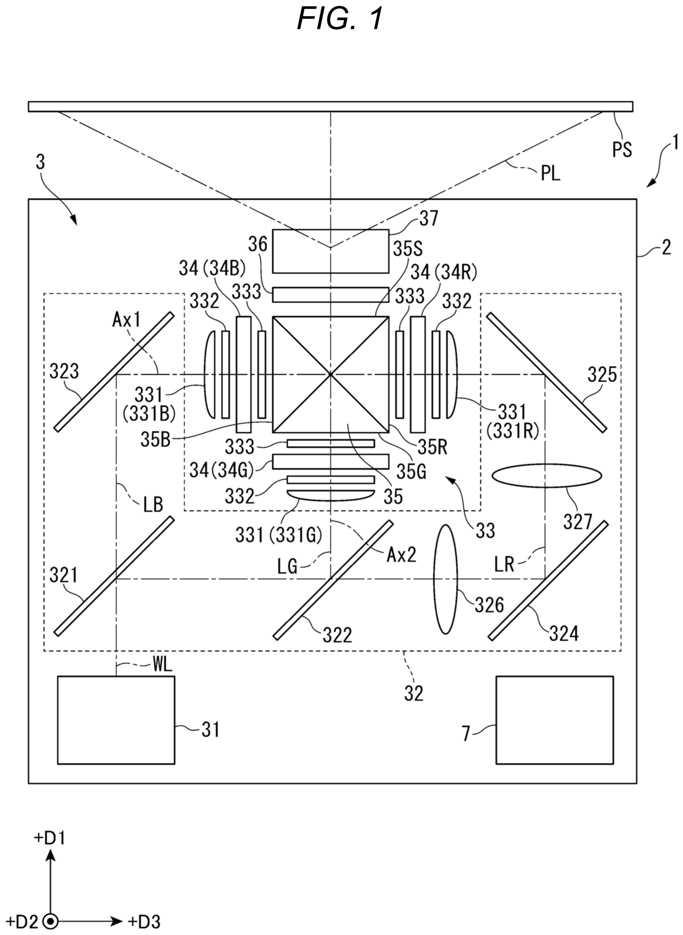

FIG. 1 is a diagrammatic view showing a schematic configuration of a projector 1 according to the present embodiment.
The projector 1 according to the present embodiment modulates a luminous flux output from a light source 31 to form image light PL according to image information, enlarges the formed image light PL, and projects the enlarged image light PL onto a projection receiving surface PS such as a screen, as shown in FIG. 1. The projector 1 includes an exterior enclosure 2, and an image projection apparatus 3, a cooling apparatus 6, and a control apparatus 7 housed in the exterior enclosure 2. In addition to the above, although not shown, the projector 1 includes a power supply apparatus that supplies electric power to electronic components that constitute the projector 1.

### Configuration of image projection apparatus

The image projection apparatus 3 forms and projects the image light PL described above. The image projection apparatus 3 includes the light source 31, a color separator 32, an image formation apparatus 33, and a projection optical apparatus 37.
In the following description, three directions perpendicular to one another are defined as a +D1 direction, a +D2 direction, and a +D3 direction. The directions described above are defined as follows: the +D1 direction is a direction in which the light source 31 outputs illumination light WL; and the +D2 direction and the +D3 direction are directions perpendicular to the +D1 direction and perpendicular to each other. It is assumed that the direction opposite the +D1 direction is a -D1 direction, that the direction opposite the +D2 direction is a -D2 direction, and that the direction opposite the +D3 direction is a -D3 direction. It is further assumed that an axis along the +D1 direction is a D1-axis, that an axis along the +D2 direction is a D2-axis, and that an axis along the +D3 direction is a D3-axis.

Configuration of light source

The light source 31 outputs the illumination light WL in the +D1 direction. The configuration of the light source 31 can, for example, be a configuration including a solid-state light emitter and a wavelength converter that converts the wavelength of the light emitted from the solid-state light emitter. The light source 31 can instead, for example, have a configuration including a discharging light emitting lamp such as an ultrahigh-pressure mercury lamp.

Configuration of color separator

The color separator 32 separates the illumination light WL incident from the light source 31 into three types of color light, blue light LB, green light LG, and red light LR. The color separator 32 includes dichroic mirrors 321 and 322, total reflection mirrors 323, 324, and 325, and relay lenses 326 and 327.

Out of the illumination light WL incident from the light source 31, the dichroic mirror 321 transmits the blue light LB in the +D1 direction, and reflects the green light LG and the red light LR in the +D3 direction.

Out of the green light LG and the red light LR separated by the dichroic mirror 321, the dichroic mirror 322 reflects the green light LG in the +D1 direction and transmits the red light LR in the +D3 direction. The green light LG reflected off the dichroic mirror 322 enters a green light modulator 34G via a field lens 331 provided in the image formation apparatus 33.

The total reflection mirror 323 reflects the blue light LB having passed through the dichroic mirror 321 in the +D3 direction. The blue light LB reflected off the total reflection mirror 323 enters a blue light modulator 34B via a field lens 331 provided in the image formation apparatus 33.

The total reflection mirror 324 reflects the red light LR having passed through the dichroic mirror 322 in the +D1 direction.

The total reflection mirror 325 reflects the red light LR reflected off the total reflection mirror 324 in the -D3 direction. The red light LR reflected off the total reflection mirror 325 enters a red light modulator 34R via a field lens 331 provided in the image formation apparatus 33.

The relay lens 326 is disposed between the dichroic mirror 322 and the total reflection mirror 324 in the optical path of the red light LR, and the relay lens 327 is disposed between the total reflection mirror 324 and the total reflection mirror 325 in the optical path of the red light LR. The relay lenses 326 and 327 compensate for optical loss of the red light LR due to the fact that the optical path of the red light LR is longer than the optical path of the blue light LB and the optical path of the green light LG.

Configuration of image formation apparatus

The image formation apparatus 33 modulates the incident blue light LB, green light LG, and red light LR separately from each other, and combines the modulated blue light LB, green light LG, and red light LR with one another to form the image light PL to be projected by the projection optical apparatus 37. The image formation apparatus 33 includes the field lenses 331, light-incident-side polarizers 332, light-exiting-side polarizers 333, the light modulators 34, a light combiner 35, and an optical path changer 36.

Configuration of field lenses

The field lenses 331 each parallelize incident light. The image formation apparatus 33 includes three field lenses 331, as shown in FIG. 1. The three field lenses 331 include a field lens 331B provided in the optical path of the blue light LB, a field lens 331G provided in the optical path of the green light LG, and a field lens 331R provided in the optical path of the red light LR. The blue light LB, the green light LG, and the red light LR having passed through the field lenses 331R, 331G, and 331B enter the light-incident-side polarizers 332 provided in accordance with the colors.

The light-incident-side polarizers 332 are disposed on the light incident side of the corresponding light modulators 34. That is, the light-incident-side polarizers 332 are disposed between the field lenses 331 and the light modulators 34 in the optical paths of the corresponding three types of color light.

The light-exiting-side polarizers 333 are disposed on the light exiting side of the corresponding light modulators 34. That is, the light-exiting-side polarizers 333 are disposed between the field lenses 331 and the light combiner 35 in the optical paths of the corresponding three types of color light.

Configuration of light modulators

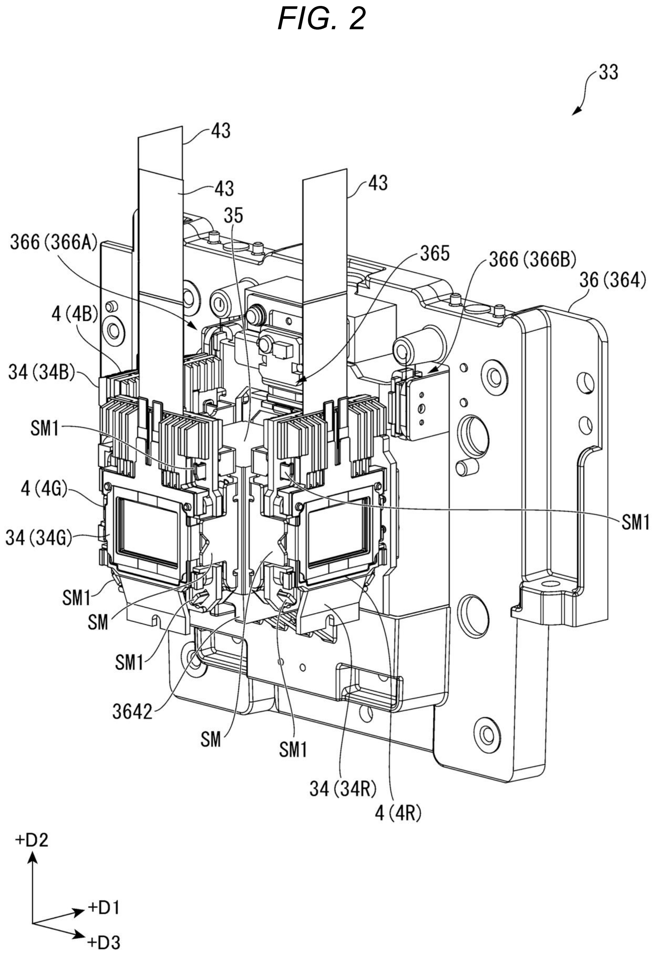

FIG. 2 is a perspective view showing a portion of the image formation apparatus 33 viewed from the side from which the green light LG is incident.

The light modulators 34 each modulate the incident color light to form image light according to image information, and outputs the formed image light to the light combiner 35. The image formation apparatus 33 includes three light modulators 34, as shown in FIGS. 1 and 2. The three light modulators 34 include the light modulator 34B for blue light, which modulates the blue light LB and outputs blue image light, the light modulator 34G for green light, which modulates the green light LG and outputs green image light, and the light modulator 34R for red light, which modulates the red light LR and outputs red image light.

Although will be described later in detail, the light modulators 34B, 34G, and 34R each include a panel module 4.

Specifically, the blue light modulator 34B includes a panel module for blue 4B, which modulates the blue light LB. The blue light LB modulated by the panel module for blue 4B is output in the direction +D3 and has an optical axis that is a first axis Ax1 along the D3-axis, and enters the light combiner 35 via the light-exiting-side polarizer 333 for the blue light LB.

The green light modulator 34G includes a panel module for green 4G, which modulates the green light LG. The green light LG modulated by the panel module for green 4G is output in the direction +D1 and has an optical axis that is a second axis Ax2 along the D1-axis, and enters the light combiner 35 via the light-exiting-side polarizer 333 for the green light LG.

The red light modulator 34R includes a panel module for red 4R, which modulates the red light LR. The red light LR modulated by the panel module for red 4R is output in the direction -D3 and has an optical axis that is the first axis Ax1, and enters the light combiner 35 via the light-exiting-side polarizer 333 for the red light LR.

The configuration of the panel module 4 will be described later in detail.

Configuration of light combiner

The light combiner 35 combines the blue light LB incident from the blue light modulator 34B, the green light LG incident from the green light modulator 34G, and the red light LR incident from the red light modulator 34R with one another to form the image light PL, and outputs the formed image light PL toward the optical path changer 36. That is, the light combiner 35 outputs the formed image light PL toward the projection optical apparatus 37.

The light combiner 35 is configured with a cross dichroic prism having a substantially cuboidal shape. The light combiner 35 has a blue light incident surface 35B, a green light incident surface 35G, a red light incident surface 35R, and a light exiting surface 35S, as shown in FIG. 1.

The blue light incident surface 35B faces the negative end in the D3 direction, and is a light incident surface on which the blue light is incident. The green light incident surface 35G faces the negative end in the D1 direction, and is a light incident surface on which the green light is incident. The red light incident surface 35R faces the positive end in the D3 direction, and is a light incident surface on which the red light is incident. The red light incident surface 35R is a surface of the light combiner 35 that is the surface opposite the blue light incident surface 35B.

The light exiting surface 35S faces the positive end in the D1 direction, and the image light PL having an optical axis that is the second axis Ax2 exits via the light exiting surface 35S. The light exiting surface 35S is a surface of the light combiner 35 that is the surface opposite the green light incident surface 35G.

Schematic configuration of optical path changer

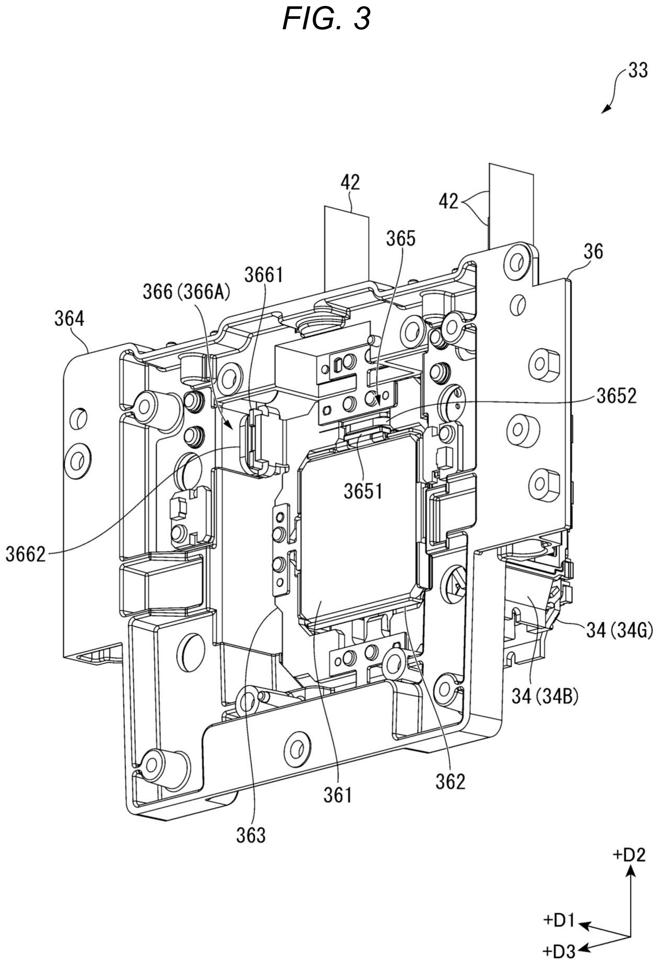

FIG. 3 is a perspective view showing a portion of the image formation apparatus 33 viewed from the side thereof via which the image light PL exits.

The optical path changer 36 is disposed on the light exiting side of the light combiner 35, which is the side via which the image light PL exits, and is disposed between the light combiner 35 and the projection optical apparatus 37 in the optical path of the image light PL, as shown in FIGS. 1 to 3. The optical path changer 36 shifts the optical path of the image light PL incident from the light combiner 35 to increase the resolution of a projection image displayed by using the image light PL projected onto the projection receiving surface PS. The configuration and effects of the optical path changer 36 will be described later in detail.

Configuration of projection optical apparatus

The projection optical apparatus 37 projects the image light PL incident from the light combiner 35 via the optical path changer 36 onto the projection receiving surface PS. Although not shown, the projection optical apparatus 37 may, for example, be a lens assembly including multiple lenses and a lens barrel that holds the multiple lenses.

Configuration of panel modules

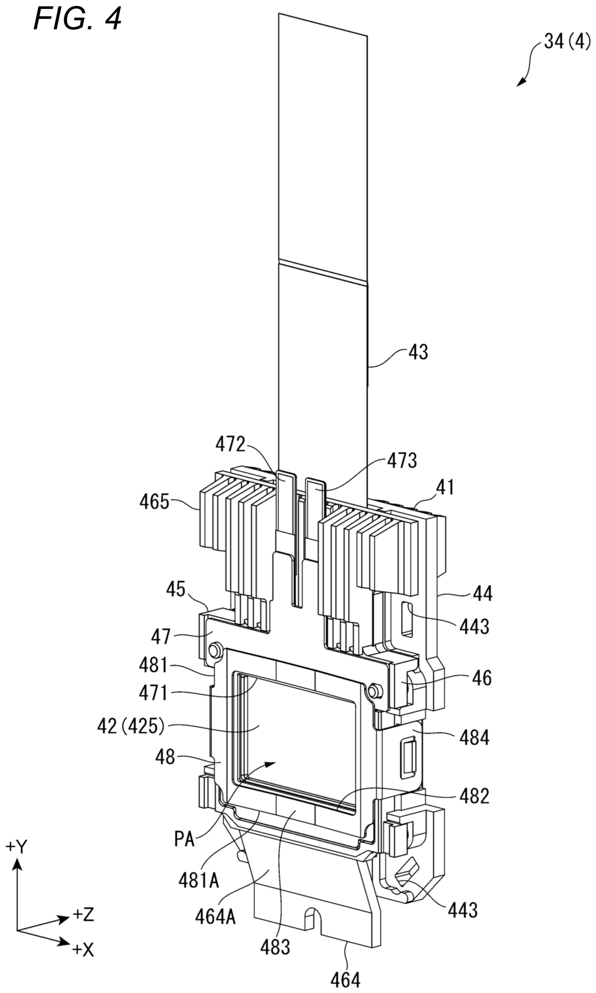

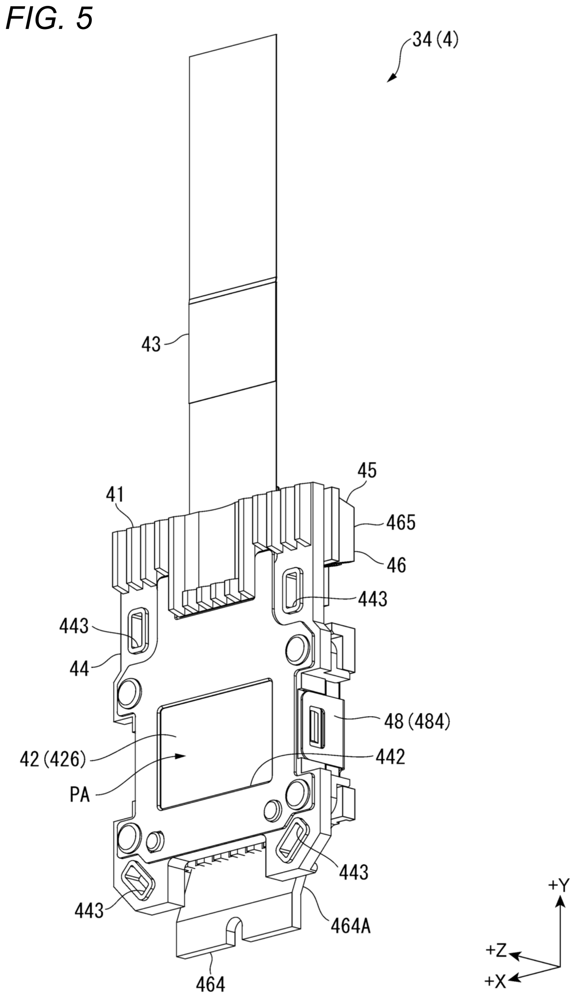

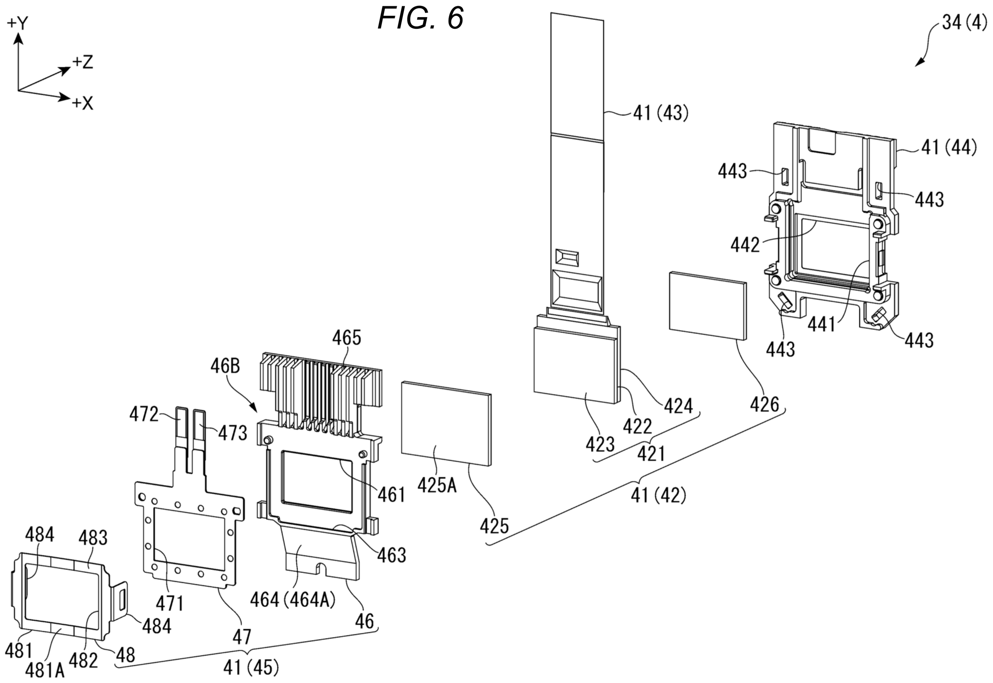

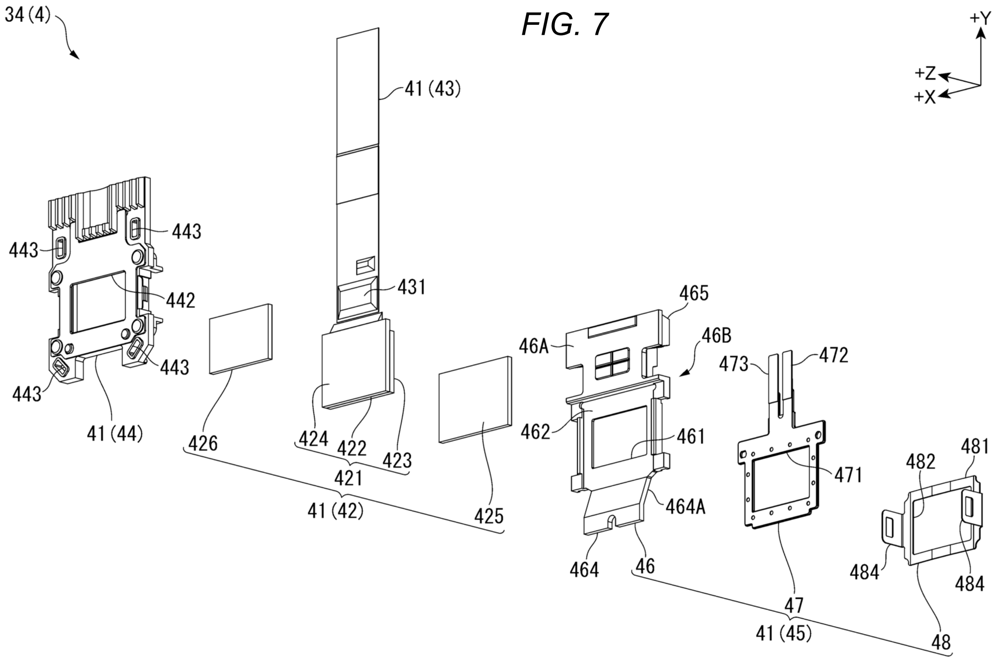

FIG. 4 is a perspective view showing each of the panel modules 4 viewed from the light incident side, and FIG. 5 is a perspective view showing the panel module 4 viewed from the light exiting side. FIG. 6 is an exploded perspective view showing the panel module 4 viewed from the light incident side, and FIG. 7 is an exploded perspective view showing the panel module 4 viewed from the light exiting side.

The panel module 4 includes a liquid crystal panel 41, a holding frame 44, and a temperature control unit 45, as shown in FIGS. 4 to 7.

In the following description, three directions perpendicular to one another are referred to as a +X direction, a +Y direction, and a +Z direction. It is assumed in the present embodiment that the +Z direction is a traveling direction of light incident on the panel module 4. It is assumed that the +X direction is a left direction with respect to the panel module 4 so viewed along the +Z direction that the +Y direction coincides with an upward direction. Although not shown, it is assumed that the direction opposite the +X direction is a -X direction, that the direction opposite the +Y direction is a -Y direction, and that the direction opposite the +Z direction is a -Z direction. That is, the +Z direction with respect to the panel module 4 corresponds to the light exiting side of the panel module 4, and the -Z direction with respect to the panel module 4 corresponds to the light incident side of the panel module 4.

In addition, an axis along the +X direction or the -X direction is defined as an X axis, an axis along the +Y direction or the -Y direction is defined as a Y axis, and an axis along the +Z direction or the -Z direction is defined as a Z axis. Note that the long sides of a modulation region PA, which will be described later, extend along the X-axis, and the short sides of the modulation region PA extend along the Y-axis.

In the panel module for blue 4B, the +Z direction is the +D3 direction, and the +X direction is the -D1 direction. In the panel module for green 4G, the +Z direction is the +D1 direction, and the +X direction is the +D3 direction. In the panel module for red 4R, the +Z direction is the -D3 direction, and the +X direction is the +D1 direction. In each of the panel modules 4B, 4G, and 4R, the +Y direction is the +D2 direction.

Configuration of liquid crystal panels

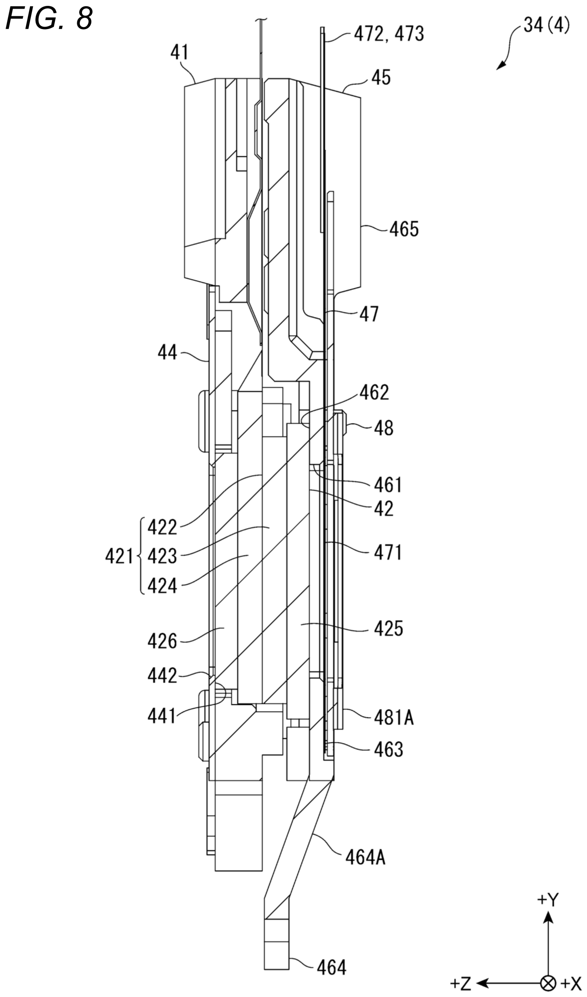

FIG. 8 shows a cross section of each of the panel modules 4 taken along the YZ plane.

The liquid crystal panel 41 is a transmissive liquid crystal panel that modulates incident color light and outputs the modulated color light as the image light along the traveling direction of the incident color light. The liquid crystal panel 41 includes a panel body 42 and a flexible printed circuit (FPC) 43, as shown in FIGS. 4 to 8.

The panel body 42 modulates the incident light while the incident light passes through the interior of the panel body 42. The panel body 42 includes an optical effector 421, a light-incident-side dustproof substrate 425, and a light-exiting-side dustproof substrate 426, the latter two of which sandwich the optical effector 421 along the Z-axis.

The optical effector 421 includes a liquid crystal layer 422, a light-incident-side substrate 423, and a light-exiting-side substrate 424, the latter two of which sandwich the liquid crystal layer 422 along the Z axis, as shown in FIG. 8.

The liquid crystal layer 422 is configured with liquid crystal molecules encapsulated between the light-incident-side substrate 423 and the light-exiting-side substrate 424.

The light-incident-side substrate 423 is disposed on the light incident side of the liquid crystal layer 422. The light-incident-side substrate 423 is provided with a counter electrode at the surface facing the liquid crystal layer 422.

The light-exiting-side substrate 424 is disposed on the light exiting side of the liquid crystal layer 422. The light-exiting-side substrate 424 is provided with multiple pixel electrodes at the surface facing the liquid crystal layer 422. The light-exiting-side substrate 424 can be configured, for example, with a thin film transistor (TFT) substrate.

Note that, when viewed in the -Z direction, which corresponds to the light incident side, or in the +Z direction, which corresponds to the light exiting side, a region of the optical effector 421 that is the region in which the multiple pixel electrodes are disposed is the modulation region PA, where incident light is modulated, and one pixel is formed by a region of the modulation region PA that is the region where a single pixel electrode is disposed. Note that the modulation region PA is formed in a rectangular shape when viewed from the light incident side, and has two long sides extending along the +X direction and two short sides extending along the +Y direction and intersecting with the long sides. In the present embodiment, the aspect ratio of the modulation region PA is 16:9, and may instead, for example, be 4:3.

The light-incident-side substrate 423 and the light-exiting-side substrate 424 are coupled to the FPC 43, and change the state of the arrangement of the liquid crystal molecules, which form the liquid crystal layer 422, in accordance with an image signal supplied from the FPC 43. The modulation region PA of the optical effector 421 thus modulates the incident light. Note that the light-incident-side substrate 423 may be the TFT substrate, and that the light-exiting-side substrate 424 may be the counter substrate having the counter electrode.

The light-incident-side dustproof substrate 425 is a light-transmissive substrate provided in a heat transferable manner at the light incident surface of the light-incident-side substrate 423, and is made, for example, of sapphire glass. The light-incident-side dustproof substrate 425 prevents shadows of dust and the like that adhere to the light incident surface of the light-incident-side substrate 423 from appearing the image light, and dissipates heat transmitted from the light-incident-side substrate 423 to the liquid crystal layer 422 out of the liquid crystal panel 41.

When the liquid crystal panel 41 is viewed in the -Z direction, the light-incident-side dustproof substrate 425 covers the modulation region PA. In detail, the light-incident-side dustproof substrate 425 covers the entire light incident surface of the light-incident-side substrate 423 when viewed from the light incident side of the light modulator 34. That is, the size of the light-incident-side dustproof substrate 425 in the plan view viewed from the light incident side of the light modulator 34 is greater than the size of the light-incident-side substrate 423 in the plan view viewed from the light incident side of the light modulator 34. In other words, the area of the light-incident-side dustproof substrate 425 viewed from the light incident side of the light modulator 34 is greater than the area of the light-incident-side substrate 423 viewed from the light incident side of the light modulator 34. In detail, the dimension of the light-incident-side dustproof substrate 425 along the +X direction is greater than or equal to the dimension of the light-incident-side substrate 423 along the +X direction, and the dimension of the light-incident-side dustproof substrate 425 along the +Y direction is greater than or equal to the dimension of the light-incident-side substrate 423 along the +Y direction, but not necessarily. Out of the dimension of the light-incident-side dustproof substrate 425 along the +X direction and the dimension of the light-incident-side dustproof substrate 425 along the +Y direction, the dimension in one of the directions may be greater than the dimension of the light-incident-side substrate 423 in the same direction, and the dimension in the other direction may be smaller than or equal to the dimension of the light-incident-side substrate 423 in the same direction.

A heat transfer frame 46, which will be described later, of the temperature control unit 45 is coupled in a heat transferable manner to the light-incident-side dustproof substrate 425, and heat exchange occurs between the heat transfer frame 46 and the light-incident-side dustproof substrate 425. When the temperature of the light-incident-side dustproof substrate 425 is higher than the temperature of the heat transfer frame 46, heat is transferred from the light-incident-side dustproof substrate 425 to the heat transfer frame 46, and when the temperature of the heat transfer frame 46 is higher than the temperature of the light-incident-side dustproof substrate 425, heat is transferred from the heat transfer frame 46 to the light-incident-side dustproof substrate 425.

Note that the thermal conductivity of the light-incident-side dustproof substrate 425 is higher than or equal to the thermal conductivity of the light-incident-side substrate 423, but not necessarily. The thermal conductivity of the light-incident-side dustproof substrate 425 may be lower than or equal to the thermal conductivity of the light-incident-side substrate 423.

The light-exiting-side dustproof substrate 426 is a light-transmissive substrate provided at the light exiting surface of the light-exiting-side substrate 424, and is made, for example, of sapphire glass. The light-exiting-side dustproof substrate 426 prevents shadows of dust and the like that adhere to the light exiting surface of the light-exiting-side substrate 424 from appearing the image light, and dissipates heat transmitted from the light-exiting-side substrate 424 to the liquid crystal layer 422 out of the liquid crystal panel 41. When the liquid crystal panel 41 is viewed in the +Z direction, the light-exiting-side dustproof substrate 426 is provided at the light exiting surface of the light-exiting-side substrate 424 in a heat transferable manner to cover at least the modulation region PA.

Note that the thermal conductivity of the light-exiting-side dustproof substrate 426 is higher than or equal to the thermal conductivity of the light-exiting-side substrate 424, but not necessarily. The thermal conductivity of the light-exiting-side dustproof substrate 426 may be lower than or equal to the thermal conductivity of the light-exiting-side substrate 424.

The FPC 43 extends in the +Y direction from the light-incident-side substrate 423 and the light-exiting-side substrate 424 and is coupled to the control apparatus 7, as shown in FIGS. 4 to 8. The FPC 43 includes a driver circuit 431, which drives the optical effector 421, and the driver circuit 431 outputs a drive signal according to an image signal input from the control apparatus 7 to the light-exiting-side substrate 424.

Configuration of holding frame

The holding frame 44 holds the panel body 42 and the FPC 43. In detail, the holding frame 44 is combined with the heat transfer frame 46 of the temperature control unit 45 to house the liquid crystal layer 422, the light-incident-side substrate 423, the light-exiting-side substrate 424, the light-incident-side dustproof substrate 425, and the light-exiting-side dustproof substrate 426. That is, the holding frame 44 is an element separate from the heat transfer frame 46. The holding frame 44 is formed in a rectangular shape elongated along the Y-axis when viewed from the light exiting side, as shown in FIGS. 5 and 7.

The holding frame 44 has a recess 441, an opening 442, and through holes 443, as shown in FIG. 6.

The recess 441 is a portion of the holding frame 44 that is recessed in the +Z direction. When the holding frame 44 and the heat transfer frame 46 are combined with each other, the recess 441 forms a housing space that houses the light-exiting-side substrate 424 and the light-exiting-side dustproof substrate 426 in the liquid crystal panel 41.

The opening 442 is located at the bottom of the recess 441, passes through the holding frame 44 along the Z-axis, and the light-exiting-side dustproof substrate 426 is disposed in the opening 442. The light output from the panel body 42 passes through the opening 442 and exits out of the liquid crystal panel 41.

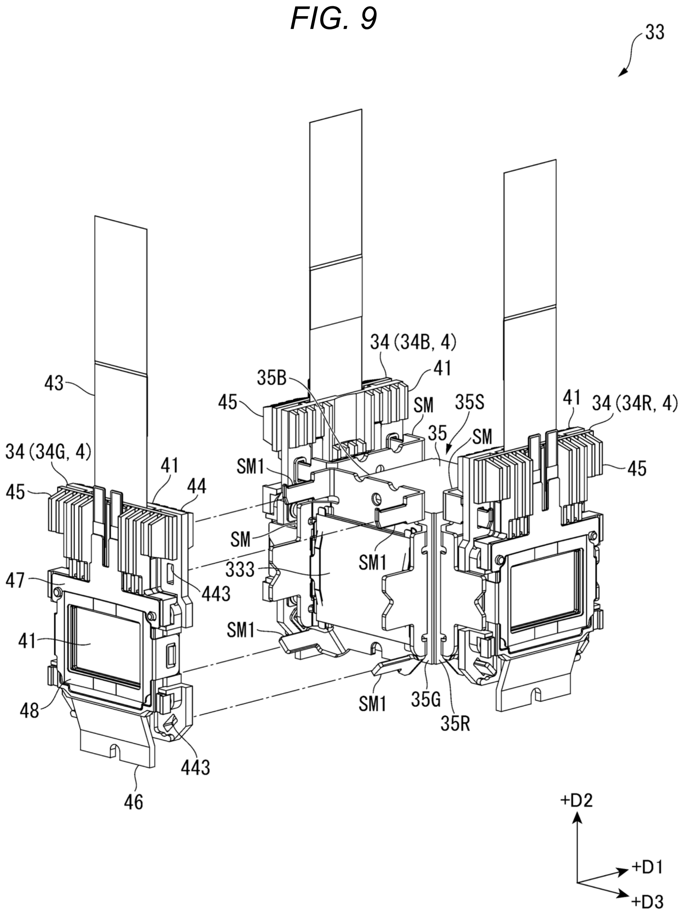

FIG. 9 is a perspective view showing a portion of the image formation apparatus 33 in a state in which one of the light modulators 34 is separated from a support member SM fixed to the light combiner 35.

The through holes 443 pass through the holding frame 44 along the Z-axis. The through holes 443 are provided the four corners of the rectangular holding frame 44 when viewed in the +Z direction, which corresponds to the light exiting side. That is, the holding frame 44 has four through holes 443. Arms SM1 of the support member SM provided at the light combiner 35 are inserted into the respective four through holes 443, as shown in FIG. 9.

The support member SM is provided at each of the blue light incident surface 35B, the green light incident surface 35G, and the red light incident surface 35R of the light combiner 35 in a state in which the support members SM hold the corresponding light-exiting-side polarizers 333. In the state in which the arms SM1 of each of the support members SM are inserted into the four through holes 443 of the holding frame 44 of the corresponding light modulator 34, the inner surfaces of the through holes 443 and the arms SM1 are bonded to each other with an adhesive such as an ultraviolet curing adhesive to integrate the light combiner 35 with the three light modulators 34B, 34G, and 34R.

Note that the support members SM each have an opening closed by the corresponding light-exiting-side polarizer 333, and the color light passing through the light-exiting-side polarizer passes through the opening and enters the light combiner 35.

Configuration of temperature control units

The temperature control units 45 each adjust the temperature of the panel body 42. In detail, the temperature control unit 45 receives heat from the light-incident-side dustproof substrate 425 to adjust the temperature of the liquid crystal layer 422 via the light-incident-side substrate 423. The temperature control unit 45 includes the heat transfer frame 46, a heating element 47, and a cover member 48.

Configuration of heat transfer frames

The heat transfer frames 46 are each formed in a shape elongated in the +Y direction when viewed from the light incident side. The heat transfer frame 46 is combined with the holding frame 44 via the cover member 48 to house the panel body 42 and support the heating element 47. The heat transfer frame 46 has an opening 461, a placement portion 463, an air guide 464, and a heat dissipater 465 as shown in FIG. 6, and further includes a contact portion 462 as shown in FIG. 7. The heat transfer frame 46 has a surface 46A, which faces the light exiting side, and a surface 46B, which faces the light incidence side and is opposite the surface 46A. The surface 46B corresponds to a first surface.

The opening 461 is formed at the heat transfer frame 46 substantially at the center thereof in the +Y direction, and passes through the heat transfer frame 46 along the Z-axis. The opening 461 is provided in a rectangular shape in accordance with the modulation region PA, and transmits the color light incident on the light-incident-side dustproof substrate 425.

The contact portion 462 is a portion of the heat transfer frame 46 that is a portion facing the light exiting side and faces the light-incident-side dustproof substrate 425, as shown in FIG. 7. In detail, the contact portion 462 is a portion of the surface 46A that is a circumferential edge portion around the opening 461. The contact portion 462 is in contact with a circumferential edge portion of a light incident surface 425A, which is shown in FIG. 6, of the light-incident-side dustproof substrate 425 when viewed from the light incident side. The portion of the light incident surface 425A that is in contact with the contact portion 462 is a portion through which the light incident on the modulation region PA does not pass. In other words, the contact portion 462 is in contact with a rectangular-frame-shaped portion of the light incident surface 425A that is a portion outside and surrounding the modulation region PA when viewed from the light incident side.

The placement portion 463 is a portion where the heating element 47 is placed and is provided at the surface 46B.

The placement portion 463 is provided at a circumferential edge portion of the surface 46B that is a portion around the opening 461. That is, the placement portion 463 is a rectangular-frame-shaped portion of the surface 46B that is a portion surrounding the opening 461.

Note that the placement portion 463 is a recess recessed from the surface 46B in the +Z direction, which is the side facing the light-incident-side dustproof substrate 425. The placement portion 463 is therefore configured to be thinner than a portion of the heat transfer frame 46 that is the portion excluding the air guide 464. That is, the dimension, in the +Z direction, of the placement portion 463 is smaller than the dimension, in the +Z direction, of the portion of the heat transfer frame 46 excluding the air guide 464. The heat of the heating element 47 placed in the placement portion 463 is thus readily transferred to the light-incident-side dustproof substrate 425 via the contact portion 462 provided at the surface 46A opposite the surface 46B, at which the placement portion 463 is located.

The air guide 464 is provided at the -Y-side end of the heat transfer frame 46. The air guide 464 guides cooling air caused to pass in the +Y direction by the cooling apparatus 6, which will be described later, to the light-incident-side dustproof substrate 425 exposed in the opening 461. In other words, the air guide 464 is provided upstream of the opening 461 of the heat transfer frame 46 in the cooling air flowing direction, and guides the cooling air to the light-incident-side dustproof substrate 425. The cooling air flowing along the light-incident-side dustproof substrate 425 flows to the heat dissipater 465.

Note that the -Z-side surface of the air guide 464 is an air guide surface 464A, which guides the cooling air. The intersection angle between the air guide surface 464A and the surface 46B and the length of the air guide surface 464A along the +Y direction will be described later in detail.

The heat dissipater 465 is provided at the surface 46B and on the side opposite the air guide 464 with the opening 461 interposed therebetween. That is, the heat dissipater 465 is provided at a +Y-side end portion of the heat transfer frame 46. The heat dissipater 465 has a configuration in which multiple fins each extending along a YZ plane are arranged along the X-axis. That is, the heat dissipater 465 includes multiple fins arranged along the X-axis.

The heat dissipater 465 dissipates the heat transferred to the heat transfer frame 46 to the cooling air flowing in the +Y direction. The heat transferred from the liquid crystal layer 422 via the light-incident-side dustproof substrate 425 is thus dissipated to the cooling air.

Configuration of heating elements

The heating elements 47 each generate heat that heats the liquid crystal layer 422 under the control of the control apparatus 7, which will be described later. The heating element 47 is a rectangular-frame-shaped portion having a rectangular passage port 471 according to the opening 461 of the heat transfer frame 46, and is placed at the placement portion 463 of the heat transfer frame 46. That is, the heat generated by the heating element 47 is transferred from the contact portion 462 to the light-incident-side dustproof substrate 425 via the placement portion 463 of the heat transfer frame 46, and in turn heats the liquid crystal layer 422 via the light-incident-side substrate 423. Note that the passage port 471 is an opening through which the light incident on the light-incident-side dustproof substrate 425 passes.

Although not shown in detail, the heating elements 47 according to the present embodiment are each a heater in which fine wiring is provided on a flexible printed circuit board, and the wiring is coupled to a pair of electrode portions 472 and 473 extending in the +Y direction. When a current is caused to flow through the pair of electrode portions 472 and 473, the wiring serves as resistance, so that the heating element 47 generates heat. Note that the heating element 47 is not limited to such a heater, and may be a thermoelectric converter such as a Peltier element.

Configuration of cover members

The cover members 48 are each provided on a side of the heating element 47 that is the side opposite the heat transfer frame 46, covers at least a portion of the heating element 47, and is fixed to the holding frame 44. That is, the cover member 48 is disposed at a position closest to the light incident side in the panel module 4, and fixes the heat transfer frame 46 and the heating element 47 to the holding frame 44. The cover member 48 includes a cover portion 481 and locking portions 484.

The cover portion 481 is a rectangular-frame-shaped portion that covers in the -Z direction the heating element 47 disposed at the placement portion 463. In the present embodiment, the cover portion 481 covers the entire surface of the heating element 47 when viewed from the light incident side. The cover portion 481 has an opening 482 provided in accordance with the passage port 471 of the heating element 47. The light to be incident on the modulation region PA passes through the opening 482.

An absorption layer 483, which absorbs visible light, is provided at a light-incident-side surface 481A of the thus configured cover portion 481. The absorption layer 483 absorbs margin light that is not incident on the modulation region PA out of the light incident on the light modulator 34. The cover member 48 therefore absorbs the margin light and produces heat when the light enters the light modulator 34. The thus produced heat is used to heat the liquid crystal layer 422.

The locking portions 484 extend in the +Z direction from the +X-side end and the -X-side end of the cover portion 481. The locking portions 484 lock the holding frame 44 when the cover member 48 is attached to the holding frame 44. The heat transfer frame 46 and the heating element 47 are thus fixed to the holding frame 44.

Assembly of panel modules 4

In the present embodiment, the panel modules 4 are each assembled as follows.

The panel body 42 is first disposed in the holding frame 44. In this process, the light-exiting-side substrate 424 is so positioned in the recess 441 that the light-exiting-side dustproof substrate 426 is disposed in the opening 442 of the holding frame 44. The heat transfer frame 46 is then disposed to cover the panel body 42. In this process, the heat transfer frame 46 is so disposed that the light-incident-side dustproof substrate 425 is disposed in the opening 461 and the contact portion 462 is in contact with the light-incident-side dustproof substrate 425.

The heating element 47 is then disposed at the placement portion 463 of the heat transfer frame 46, and the cover member 48 is so fixed to the holding frame 44 that the heat transfer frame 46 is sandwiched by the cover portion 481 of the cover member 48 and the holding frame 44.

The panel module 4 is thus assembled.

Configuration of optical path changer

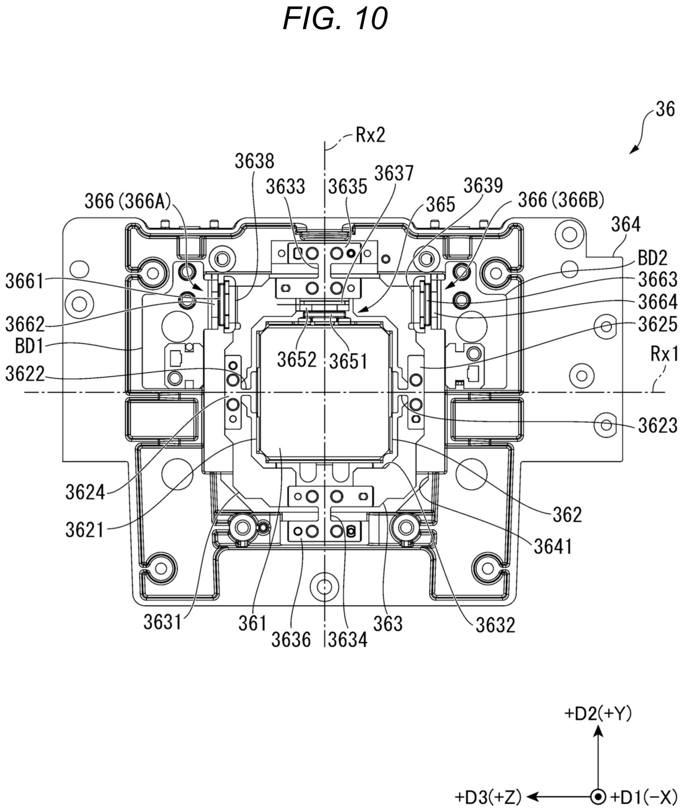

FIG. 10 shows the optical path changer 36 viewed from the light exiting side.

The optical path changer 36 shifts the optical path of the image light PL incident from the light combiner 35 to increase the resolution of a projection image to be displayed on the projection receiving surface PS, as described above.

The optical path changer 36 includes an optical member 361, a first holding member 362, a second holding member 363, a base 364, a first actuator 365, and a second actuator 366, as shown in FIG. 10.

Note that FIG. 10 shows the +X direction, the +Y direction, and the +Z direction in the blue light modulator 34B disposed at a position closer to the optical path changer 36 than the green light modulator 34G in addition to the arrows indicating the +D1 direction, the +D2 direction, and the +D3 direction.

In the view shown in FIG. 10, the +D1 direction is the direction perpendicular to the plain of view and away from the plain of view, the +D2 direction is the upward direction, and the +D3 direction is the leftward direction. Out of the +X direction, the +Y direction, and the +Z direction in the blue light modulator 34B, the +X direction coincides with the -D1 direction, the +Y direction coincides with the +D2 direction, and the +Z direction coincides with the +D3 direction.

Configuration of optical member

The optical member 361 is a light-transmissive substrate made, for example, of glass, and is an optical path changing member. The optical member 361 is disposed in the optical path between the light combiner 35 and the projection optical apparatus 37, and the image light PL is incident from the light combiner 35. The actuators 365 and 366 operate to cause the optical member 361 to incline with respect to an imaginary plane perpendicular to the optical axis of the light combiner 35 along which the image light PL exits, so that the image light PL is refracted and the optical path thereof is shifted accordingly.

Configuration of first holding member

The first holding member 362 is a rectangular-frame-shaped portion, holds the optical member 361, and is held by the second holding member 363 in a swingable manner around a first swing axis Rx1. The first holding member 362 includes a frame portion 3621, shaft portions 3622 and 3623, and fixed portions 3624 and 3625.

The frame portion 3621 surrounds and supports the optical member 361. The frame portion 3621 has an opening which is not shown but through which the light passing through the optical member 361 passes. A first magnet 3651 of the first actuator 365 is fixed to a circumferential edge of the frame portion 3621 that is the edge facing the positive end in the D2 direction.

The shaft portion 3622 protrudes from the outer circumference of the frame portion 3621 in the +D3 direction, and the shaft portion 3623 protrudes from the outer circumference of the frame portion 3621 in the -D3 direction.

The fixed portion 3624 is provided at the tip of the shaft portion 3622, and the fixed portion 3625 is provided at the tip of the shaft portion 3623. Fixing the fixed portions 3624 and 3625 to the second holding member 363 causes the first holding member 362 to be supported in a swingable manner around the first swing axis Rx1 along the +D3 direction. The first swing axis Rx1 coincides with an extension of the center axis of the shaft portions 3622 and 3623.

Configuration of second holding member

The second holding member 363 holds the first holding member 362 in a swingable manner around the first swing axis Rx1, and further holds a first coil 3652 of the first actuator 365. The second holding member 363 includes a frame portion 3631, an opening 3632, shaft portions 3633 and 3634, fixed portions 3635 and 3636, and support portions 3637 and 3638, and 3639.

The frame portion 3631 is a frame-shaped portion, and the opening 3632 is provided at the center of the frame portion 3631 when viewed from the light exiting side.

The opening 3632 passes through the frame portion 3631 along the +X direction. The frame portion 3621 of the first holding member 362 is disposed inside the opening 3632.

The shaft portion 3633 protrudes from the outer circumference of the frame portion 3631 in the +D2 direction, and the shaft portion 3634 protrudes from the outer circumference of the frame portion 3631 in the -D2 direction.

The fixed portion 3635 is provided at the tip of the shaft portion 3633, and the fixed portion 3636 is provided at the tip of the shaft portion 3634. Fixing the fixed portions 3635 and 3636 to the base 364 causes the second holding member 363 to be supported in a swingable manner around a second swing axis Rx2 along the +D2 direction. The second swing axis Rx2 coincides with an extension of the center axis of the shaft portions 3633 and 3634.

The support portion 3637 is provided at the +D2-side inner edge of the opening 3632. The support portion 3637 supports the first coil 3652 of the first actuator 365.

The support portion 3638 is provided at a +D2-side and +D3-side end portion of the frame portion 3631. The support portion 3638 supports a second magnet 3661 of the second actuator 366. The support portion 3639 is provided at a +D2-side and -D3-side end portion of the frame portion 3631. The support portion 3639 supports a second magnet 3663 of the second actuator 366. Note that the support portions 3638 and 3639 are provided at positions where the support portions 3638 and 3639 sandwich the support portion 3637 along the D3-axis.

Configuration of base

The base 364 holds the second holding member 363 in a swingable manner around the second swing axis Rx2, and further holds second coils 3662 and 3664 of the second actuator 366. The base 364 is a frame-shaped portion, and has an opening 3641, in which the second holding member 363 is disposed.

In addition to the above, the base 364 includes a pedestal portion 3642, which supports the light combiner 35, which is configured with a cross dichroic prism, from the negative side in the D2 direction, as shown in FIG. 2.

Configuration of first actuator

The first actuator 365 swings the optical member 361 around the first swing axis Rx1 by swinging the first holding member 362 around the first swing axis Rx1 along the D3-axis. The first actuator 365 includes the first magnet 3651 and the first coil 3652 disposed at a position on the second swing axis Rx2 and shifted in the +D2 direction from the first swing axis Rx1. That is, the first actuator 365 is a voice coil motor including the first magnet 3651 fixed to the first holding member 362 and the first coil 3652 fixed to the second holding member 363.

When the control apparatus 7, which will be described later, supplies the first coil 3652 with an alternating current, so that the optical member 361 held by the first holding member 362 is swung around the first swing axis Rx1.

Configuration of second actuator

The second actuator 366 swings the optical member 361 around the second swing axis Rx2 along the D2-axis by swinging the second holding member 363.

The second actuator 366 includes a first driver 366A and a second driver 366B disposed at positions shifted in the +D2 direction from the first swing axis Rx1 and disposed in a line symmetric manner with respect to the second swing axis Rx2. That is, the first driver 366A and the second driver 366B are disposed at positions where the first driver 366A and the second driver 366B sandwich the second swing axis Rx2, and the second actuator 366 is disposed at a position shifted in the +D2 direction from the first swing axis Rx1. The +D2 direction is the direction along the short sides of the modulation region PA of each of the panel modules 4B, 4G, and 4R.

The first driver 366A is disposed at a position shifted in the +D3 direction from the second swing axis Rx2, and the second driver 366B is disposed at a position shifted in the -D3 direction from the second swing axis Rx2.

The first driver 366A is a voice coil motor including the second magnet 3661 fixed to the second holding member 363 and the second coil 3662 supported by the base 364.

The second driver 366B is a voice coil motor including the second magnet 3663 fixed to the second holding member 363 and the second coil 3664 supported by the base 364.

Note that the second coil 3662 is fixed together with a substrate BD1, which supplies the second coil 3662 with a current, to the base 364, and the second coil 3664 is fixed together with a substrate BD2, which supplies the second coil 3664 with a current, to the base 364.

The control apparatus 7, which will be described later, causes the substrates BD1 and BD2 to supply the second coils 3662 and 3664 with alternating currents having opposite phases to swing the second holding member 363 around the second swing axis Rx2 with respect to the base 364. The optical member 361 is thus swung around the second swing axis Rx2.

Optical path shifted by optical path changer

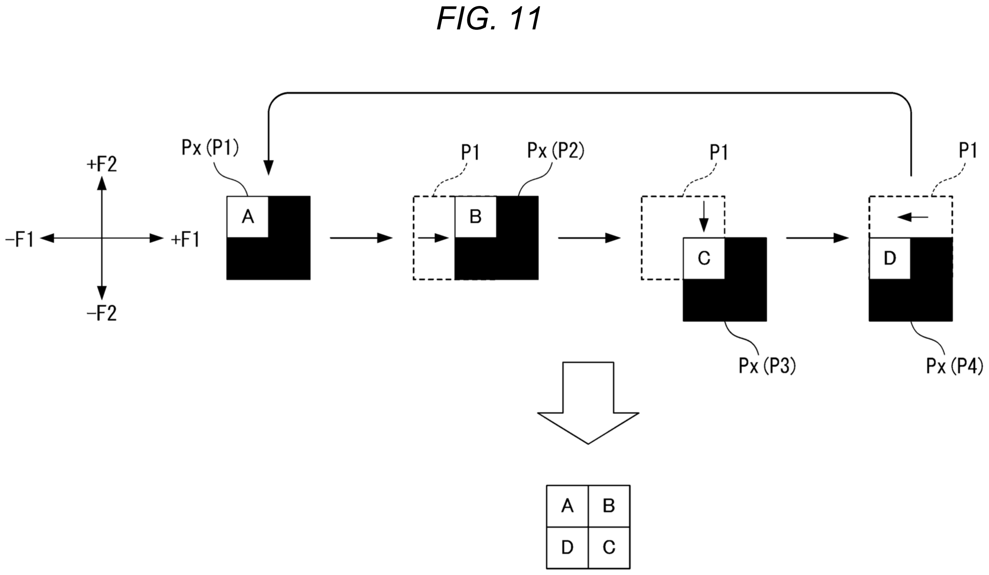

FIG. 11 illustrates the optical path of the image light shifted by the optical path changer 36.

An increase in the resolution of a projection image achieved by the optical path changer 36 will now be described.

As described above, the optical path changer 36 changes the posture of the optical member 361, through which the image light PL passes, to refract the image light PL in the optical member 361 to shift the optical path of the image light PL.

Note that a +F1 direction and a +F2 direction shown in FIG. 11 are directions perpendicular to each other at the projection receiving surface PS, that a -F1 direction is the direction opposite the +F1 direction, and that a -F2 direction is the direction opposite the +F2 direction. The +F1 direction corresponds to a first direction, and the -F2 direction corresponds to a second direction.

Specifically, the optical path changer 36 swings the optical member 361 in two directions, a first swing direction around the first swing axis Rx1 and a second swing direction around the second swing axis Rx2, to shift the optical path of the image light PL in the ±F1 direction and the ±F2 direction as shown in FIG. 11. A pixel Px of a projection image displayed on the projection receiving surface PS is thus shifted in the ±F1 direction and the ±F2 direction.

The control apparatus 7, which will be described later, causes the optical path changer 36 to combine the operation of shifting the optical path of the image light PL in the ±F1 direction and the operation of shifting the optical path of the image light PL in the ±F2 direction with each other to increase an apparent number of pixels for a high-resolution projection image.

For example, the control apparatus 7 shifts the optical path of the image light PL to move the pixel Px to a position shifted by half a pixel in each of the ±F1 direction and the ±F2 direction. Note that the half a pixel indicates the half size of the pixel Px.

The position where an image is displayed on the projection receiving surface PS is therefore shifted from a first position P1 to a second position P2 shifted by half a pixel in the +F1 direction, from the second position P2 to a third position P3 shifted by half a pixel in the -F2 direction, and from the third position P3 to a fourth position P4 shifted by half a pixel in the -F2 direction. The second position P2, the third position P3, and the fourth position P4 each correspond to a position shifted from the first position P1.

The control apparatus 7 then causes the optical path changer 36 to shift the optical path of the image light PL in a way that the pixel Px is displayed at each of the positions P1, P2, P3, and P4 for a fixed period, and changes the content displayed by each of the light modulators 34B, 34G, and 34R in synchronization with the optical path shift. Pixels A, B, C, and D having a size smaller in appearance than the size of the pixel Px can thus be displayed.

For example, to display the pixels A, B, C, and D as a whole at a frequency of 60 Hz, the content displayed by each of the liquid crystal panels 41 needs to be switched from one to another in correspondence with the positions P1, P2, P3, and P4 at a speed four times as high as 60 Hz. In this case, setting the refresh rate of each of the liquid crystal panels 41 at 240 Hz, and causing the liquid crystal panel 41 to sequentially form the image light PL containing the pixel A displayed at the first position P1, the image light PL containing the pixel B displayed at the second position P2, the image light PL containing the pixel C displayed at the third position P3, and the image light PL containing the pixel D displayed at the fourth position P4 allow a projection image having high apparent resolution to be displayed.

In the example of the optical path shift shown in FIG. 11, the ±F1 direction and the ±F2 direction are the directions in which the pixels Px displayed in a matrix on the projection receiving surface PS are arranged. Note, however, that the ±F1 direction and the ±F2 direction may not be directions perpendicular to each other, and may be directions inclining with respect to the directions in which the pixels Px are arranged. Even in such shift directions, the pixels Px can each be moved to each of the positions P1, P2, P3, and P4 by appropriately combining the optical path shifts in the ±F1 direction and the ±F2 direction with each other. The amount of shift of each of the positions P2 to P4 from the first position P1 is not limited to half a pixel, and may, for example, be one fourth or three fourth of the pixel Px.

Positional relationship between heating element and actuators

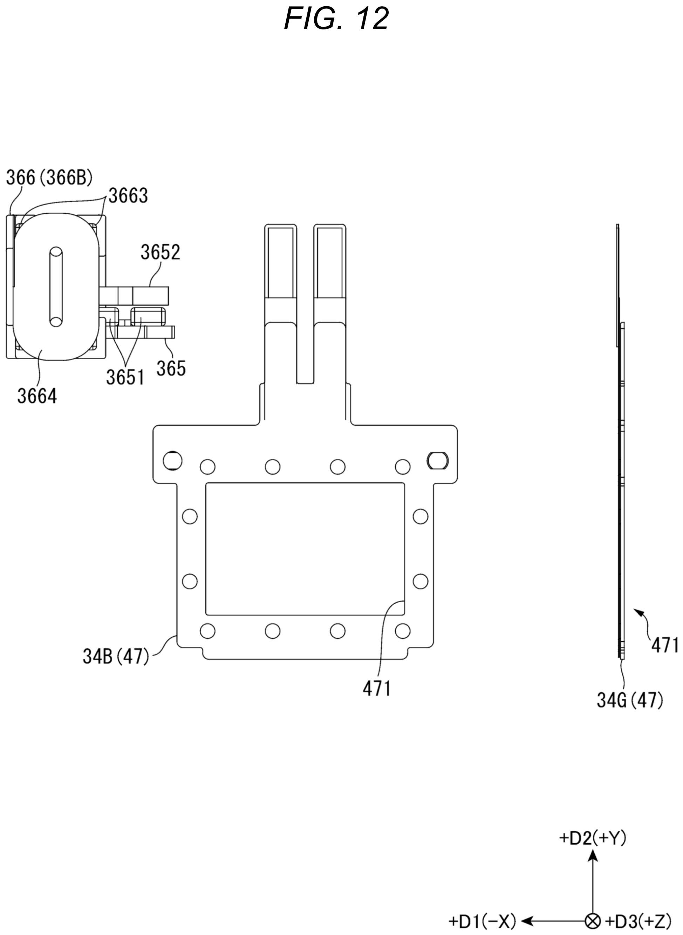

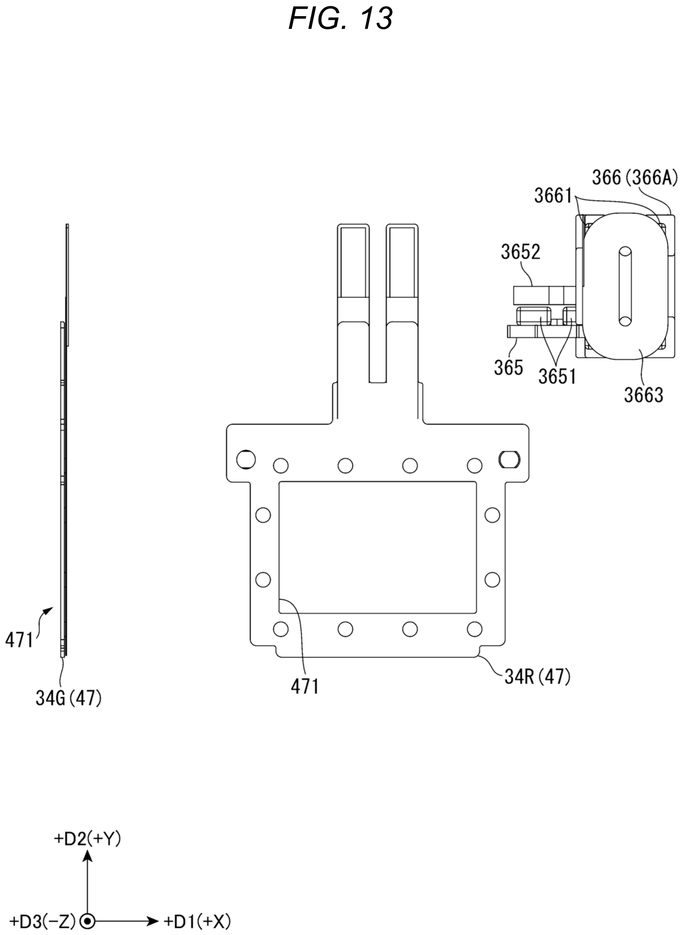

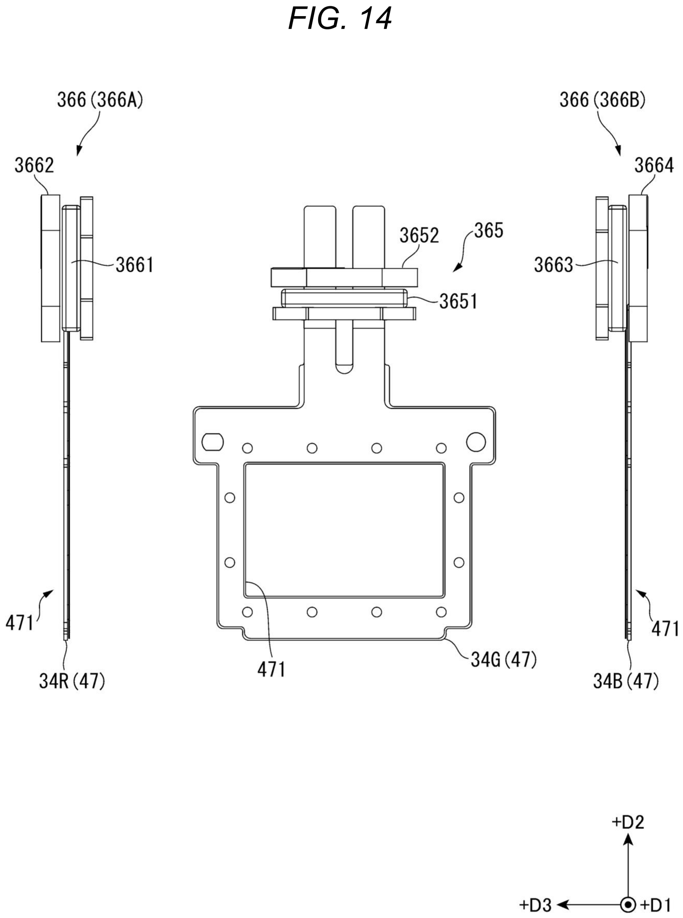

FIG. 12 shows the positional relationship between the heating element 47 in each of the light modulators 34B and 34G and the actuators 365 and 366 of the optical path changer 36 viewed from the blue light incident side. FIG. 13 shows the positional relationship between the heating element 47 in each of the light modulators 34R and 34G and the actuators 365 and 366 viewed from the red light incident side. FIG. 14 shows the positional relationship between the heating element 47 in each of the light modulators 34B, 34G, and 34R and the actuators 365 and 366 viewed from the light exiting side of the optical path changer 36. FIG. 12 shows arrows indicating the +D1, +D2, and +D3 directions, and arrows indicating the +X, +Y, and +Z directions in the light modulators 34B. FIG. 13 shows arrows indicating the +D1, +D2, and +D3 directions, and arrows indicating the +X, +Y, and +Z directions in the light modulators 34R.

For example, when the temperature of the liquid crystal layer 422 is low, the heating element 47 generates heat to heat the liquid crystal layer 422. On the other hand, when the heat generated by the heating element 47 is transferred to the magnets 3651, 3661, and 3663 of the actuators 365 and 366, so that the temperatures of the magnets 3651, 3661, and 3663 rise, a phenomenon called demagnetization, which weakens the magnetic forces of the magnets 3651, 3661, and 3663, occurs.

Therefore, to operate the first actuator 365 and the second actuator 366 in a stable manner, it is necessary to separate the first magnet 3651 and the second magnets 3661 and 3663 from the heating element 47.

In the present embodiment, the heating element 47 in the light modulator 34B is disposed at a position away from the actuators 365 and 366 in the +D2 direction, as shown in FIGS. 12 to 14.

Specifically, the heating element 47 in the light modulator 34B is provided in the light modulator 34B at a position where the heating element 47 surrounds the modulation region PA, through which the blue light passes, and the actuators 365 and 366 are disposed in the optical path changer 36 at positions shifted in the +D2 direction from the optical member 361, through which the image light PL passes. The +D2 direction is a direction along the short sides of the modulation region PA of the light modulator 34B, as described above. The heating element 47 in the light modulator 34B is therefore disposed at a position separate from the actuators 365 and 366 in the -D2 direction.

Similarly, the heating element 47 in the light modulator 34R is disposed at a position away from the actuators 365 and 366 in the +D2 direction, as shown in FIGS. 13 and 14.

Specifically, the heating element 47 in the light modulator 34R is provided in the light modulator 34R at a position where the heating element 47 surrounds the modulation region PA, through which the red light passes, and the actuators 365 and 366 are disposed in the optical path changer 36 at positions shifted in the +D2 direction from the optical member 361, through which the image light PL passes. The heating element 47 in the light modulator 34R is therefore disposed at a position separate from the actuators 365 and 366 in the +D2 direction.

As described above, since the heating element 47 in each of the light modulators 34B and 34R and each of the actuators 365 and 366 are disposed separate from each other in the +D2 direction, the thermal influence of the heating element 47 in each of the light modulators 34B and 34R on each of the magnets 3651, 3661, and 3663 can be suppressed.

The heating element 47 in the light modulator 34G is disposed at a position away from the actuators 365 and 366 not only in the -D2 direction but also in the -D1 direction. Note that since the light combiner 35 is disposed between the light modulator 34G and the optical path changer 36, and the light modulator 34G and the optical path changer 36 are disposed sufficiently separate from each other, the heat generated by the heating element 47 in the light modulator 34G does not greatly affect the actuator 365 or 366.

Occurrence of demagnetization of the first magnet 3651 and the second magnets 3661 and 3663 can therefore be suppressed, so that a situation in which the heat hinders the operation of the optical path changer 36 can be suppressed.

Configuration of cooling apparatus

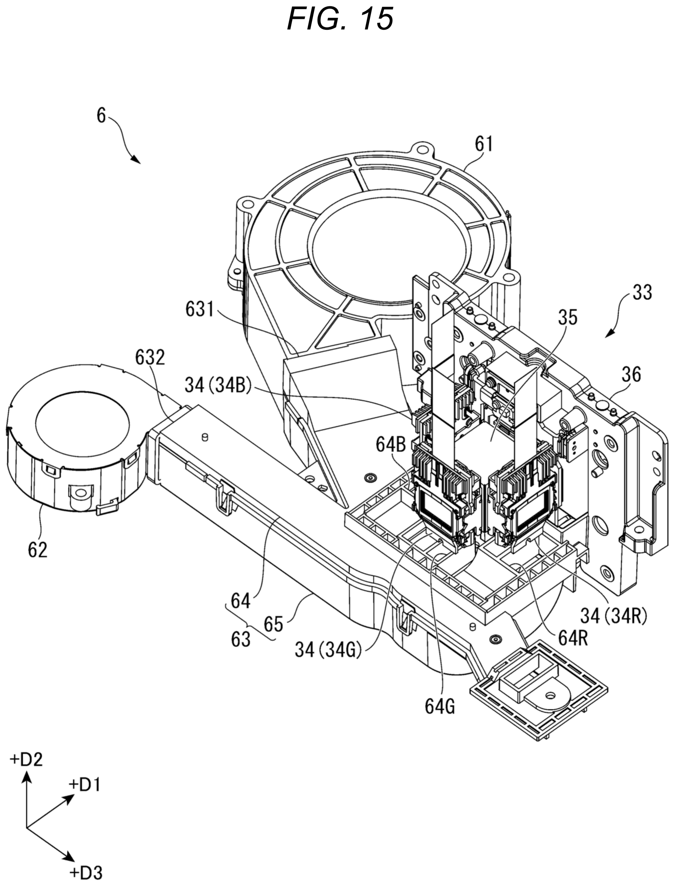

FIG. 15 is a perspective view showing a portion of the image formation apparatus 33 and the entirety of the cooling apparatus 6.

The cooling apparatus 6 cools cooling targets that constitute the projector 1. The cooling apparatus 6 has a configuration in which the image formation apparatus 33, which is one of the cooling targets, is cooled, as shown in FIG. 15. Specifically, the cooling apparatus 6 includes fans 61 and 62, and a duct 63.

The fans 61 and 62 each send a cooling gas to generate cooling air that cools the image formation apparatus 33. In the present embodiment, each of the fans 61 and 62 is a centrifugal fan, and may instead be an axial fan. In the example shown in FIG. 15, the fan 61 is larger than the fan 62, and the amount of air sent by the fan 61 is greater than the amount of air sent by the fan 62.

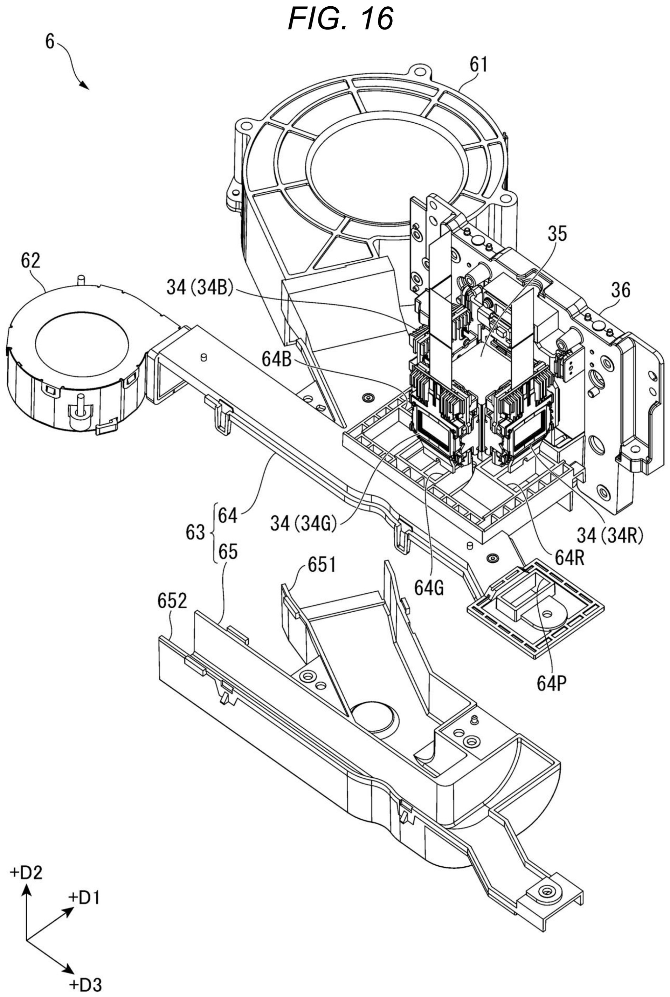

FIG. 16 is an exploded perspective view showing the cooling apparatus 6 in a state in which a first duct portion 64 and a second duct portion 65 are separated from the cooling apparatus 6.

The duct 63 includes a first introduction portion 631, via which the cooling air sent from the fan 61 is introduced into the image formation apparatus 33, and a second introduction portion 632, via which the cooling air sent from the fan 62 is introduced into the image formation apparatus 33. The duct 63 guides the cooling air introduced from the fans 61 and 62 into the image formation apparatus 33 to the light modulators 34B, 34G, and 34R and other cooling targets. The duct 63 is configured with the combination of the first duct portion 64 and the second duct portion 65, as shown in FIG. 16.

The first duct portion 64 is disposed at a position shifted in the +D2 direction from the second duct portion 65. The first duct portion 64 has four outlets 64B, 64G, 64R, and 64P, which pass through the first duct portion 64 along the +D2 direction.

The outlet 64B is provided in correspondence with the light modulator 34B. The outlet 64B sends the cooling air having flowed through the duct 63 toward the light modulator 34B in the +D2 direction.

The outlet 64G is provided in correspondence with the light modulator 34G. The outlet 64G sends the cooling air having flowed through the duct 63 toward the light modulator 34G in the +D2 direction.

The outlet 64R is provided in correspondence with the light modulator 34R. The outlet 64R sends the cooling air having flowed through the duct 63 toward the light modulator 34R in the +D2 direction.

The outlet 64P is provided in correspondence with the other cooling target described above. The outlet 64P sends the cooling air having flowed through the duct 63 toward the other cooling targets in the +D2 direction. Note that examples of the other cooling target may include optical components that constitute the image projection apparatus 3. The optical components may, for example, be a polarization converter that is not shown in FIG. 1. The polarization converter is an element that separates incident light into a p-polarized component and an s-polarized component and converts one of the separated p-polarized component and s-polarized component into the other polarized component to align the polarization directions of the polarized components of the incident light with each other into one type of polarized component.

The second duct portion 65 is disposed on a side of the first duct portion 64 that is the side opposite the image formation apparatus 33, and is combined with the first duct portion 64. The second duct portion 65 includes a first flow divider 651 and a second flow divider 652.

The first flow divider 651 divides first cooling air sent from the fan 61 into two streams of cooling air. One of the two streams of the first cooling air flows to the light modulator 34B via the outlet 64B, and the other stream of the first cooling air flows to the light modulator 34G via the outlet 64G.

The second flow divider 652 divides second cooling air sent from the fan 62 into two streams of cooling air. One of the two streams of the second cooling air flows to the light modulator 34R via the outlet 64R, and the other stream of the second cooling air flows to the other cooling targets via the outlet 64P.

The thus configured duct 63 causes the cooling air to flow in the +D2 direction along the light modulators 34B, 34G, and 34R. In other words, the cooling air sent from the duct 63 flows in the +Y direction along the light modulators 34B, 34G, and 34R.

Detailed configuration of air guide

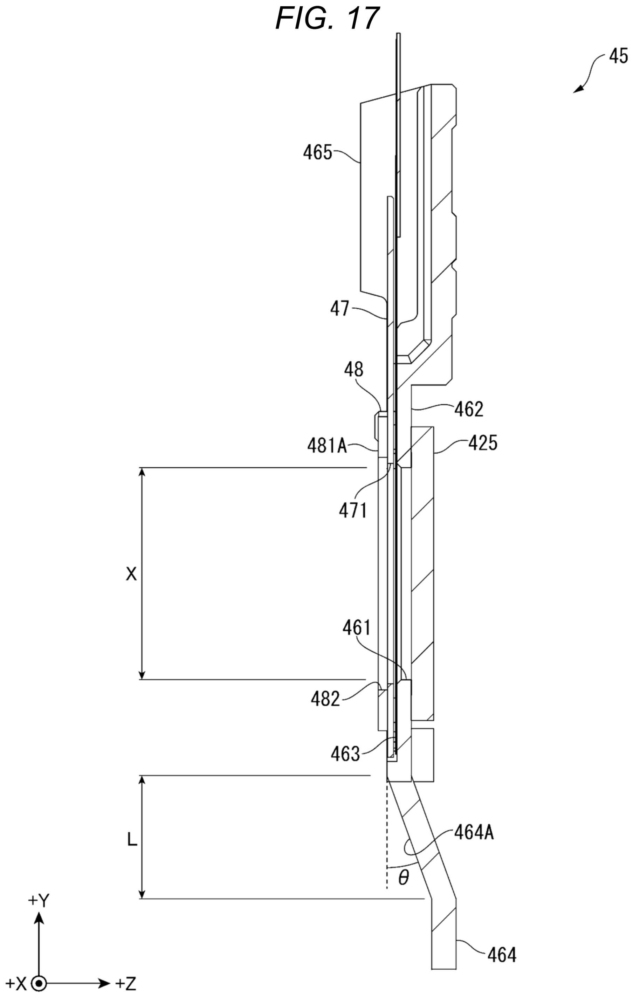

FIG. 17 shows a cross section of the heat transfer frame 46 and the light-incident-side dustproof substrate 425 taken along the YZ plane.

The heat transfer frame 46 has the air guide 464 located at a position shifted in the -Y direction from the opening 461, and the cooling air flowing in the +Y direction is guided by the air guide 464 to the light-incident-side dustproof substrate 425 in the opening 461, as described above.

To reduce the size of the heat transfer frame 46 while the air guide 464 preferably guides the cooling air into the opening 461, it is necessary to appropriately set the intersection angle between the air guide surface 464A and an extension surface of the surface 46B of the heat transfer frame 46 and the dimension of the air guide surface 464A along the +Y direction.

To this end, in the present embodiment, the heat transfer frame 46 including the air guide 464 is configured to satisfy Expression 1 below.

In Expression 1 below, L represents the dimension of the air guide surface 464A in the +Y direction and is expressed in "mm (millimeters)". $\theta$ represents the intersection angle between the air guide surface 464A and the extension surface of the surface 46B, and tis expressed in "°". x represents the dimension of the opening 461 in the +Y direction, and is expressed in "mm (millimeters)". v represents the kinematic viscosity coefficient of air. U represents the speed of the airflow flowing in the +Y direction, and is expressed in "m/s". Note that the +Y direction corresponds to an air guide direction toward the opening 461 along the air guide surface 464A, and the surface 46B corresponds to the first surface.

$$L \times \tan\theta \leq 10 \times (4.91x^{1/2} \times (v/U)^{1/2}) \ ...(1)$$

In Expression 1 described above, "$4.91x^{1/2} \times (v/U)^{1/2}$" indicates the thickness of a laminar flow boundary layer, and is expressed in meters.

Setting the dimension L of the air guide surface 464A in the +Y direction and the intersection angle $\theta$ between the air guide surface 464A and the extension surface of the surface 46B in the range within which Expression 1 is satisfied allows the cooling air to be preferably guided to the light-incident-side dustproof substrate 425 exposed in the opening 461. In addition to the above, since the necessary dimension L can be reduced, the dimension of the heat transfer frame 46 along the +Y direction can be reduced, and in turn the light modulators 34 can be reduced in size.

Configuration of control apparatus

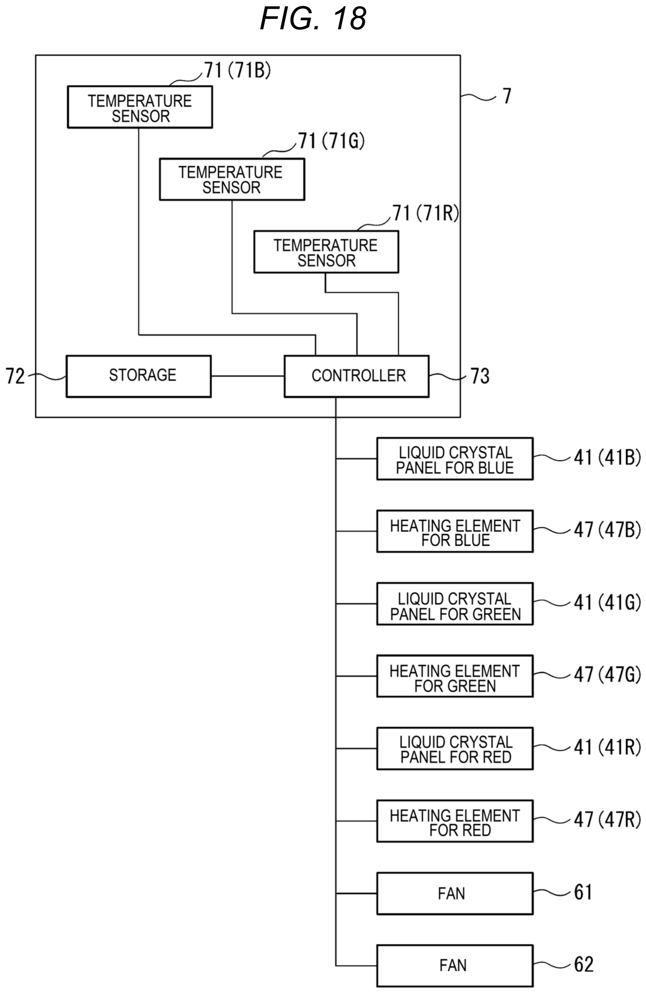

FIG. 18 is a block diagram showing the configuration of the control apparatus 7.
The control apparatus 7 controls the operation of the projector 1. For example, the control apparatus 7 controls the operation of the heating element 47 provided in each of the panel modules 4B, 4G, and 4R and the fans 61 and 62 in accordance with the temperature of the liquid crystal panel 41 of each of the panel modules 4B, 4G, and 4R.
The control apparatus 7 includes temperature sensors 71, a storage 72, and a controller 73, as shown in FIG. 18.
In the following description, the liquid crystal panel 41 and the heating element 47 of the panel module for blue 4B are referred to as a liquid crystal panel for blue 41B and a heating element for blue 47B. The liquid crystal panel 41 and the heating element 47 of the panel module for green 4G are referred to as a liquid crystal panel for green 41G and a heating element for green 47G. The liquid crystal panel 41 and the heating element 47 of the panel module for red 4R are referred to as a liquid crystal panel for red 41R and a heating element for red 47R.

Configuration of temperature sensor

The temperature sensors 71 are provided in the light modulators 34 and detect the temperatures of the liquid crystal panels 41 and in turn the temperatures of the liquid crystal layers 422. The control apparatus 7 includes three temperature sensors 71, which include temperature sensors 71B, 71G, and 71R.

The temperature sensor 71B detects the temperature of the liquid crystal panel for blue 41B.
The temperature sensor 71G detects the temperature of the liquid crystal panel for green 41G.
The temperature sensor 71R detects a temperature of the liquid crystal panel for red 41R.
The temperature sensors 71B, 71G, and 71R each output the detected temperature to the controller 73.

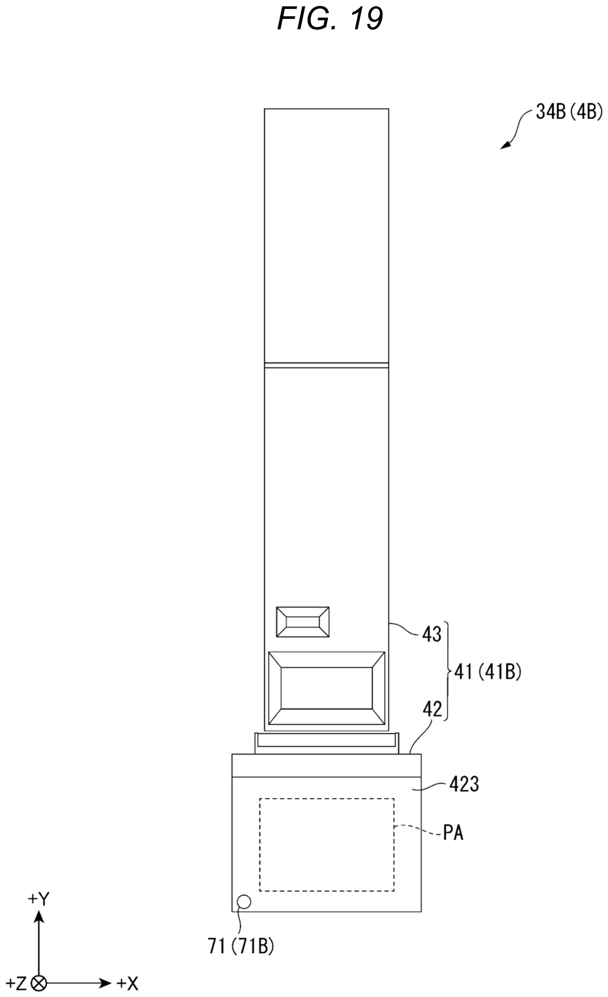

FIG. 19 shows the position of the temperature sensor 71B in the liquid crystal panel for blue 41B.
The temperature sensor 71B is provided in a portion of the liquid crystal panel for blue 41B that is an upstream portion along the cooling air, as shown in FIG. 19. In detail, the temperature sensor 71B is disposed at a position shifted in the -Y direction, which is a position upstream of the modulation region PA along the cooling air, in the liquid crystal panel for blue 41B. In the present embodiment, the temperature sensor 71B is disposed at the light-exiting-side substrate 424, which is a TFT substrate, but outside the modulation region PA, and is shifted in the -Y direction from the modulation region PA. The same applies to the temperature sensor 71G provided in the liquid crystal panel for green 41G and the temperature sensor 71R provided in the liquid crystal panel for red 41R.
When the heating element 47 generates heat in the state in which the temperature sensors 71 are each disposed at a position downstream of the modulation region PA along the cooling air, there is a possibility of detection of a high temperature even when a portion of the modulation region PA that is an upstream portion along the cooling air is not sufficiently heated. In this case, in the state in which the temperature of a portion of the modulation region PA that is a downstream portion along the cooling air is not sufficiently high, when the controller 73, which will be described later, reduces the amount of heat generated by the heating element 47, there is a concern that the liquid crystal responsiveness of the downstream portion may lower, so that a high-resolution image cannot be displayed.
In contrast, when the temperature sensors 71 are each disposed in the upstream portion, where the cooling effect provided by the cooling air is higher than that in the downstream portion, and the temperature detected by the temperature sensor 71 falls within a target temperature range, it can be said that the entire modulation region PA falls within the target temperature range, so that the aforementioned deterioration of the liquid crystal responsiveness can be suppressed.

Configuration of storage

The storage 72 shown in FIG. 18 is configured with a storage device such as a nonvolatile memory, and stores programs and data necessary for controlling the projector 1. For example, the storage 72 stores a control program used by the controller 73 to carry out a control process that will be described later. For example, the storage 72 stores various thresholds necessary for the control process.

Schematic configuration of controller

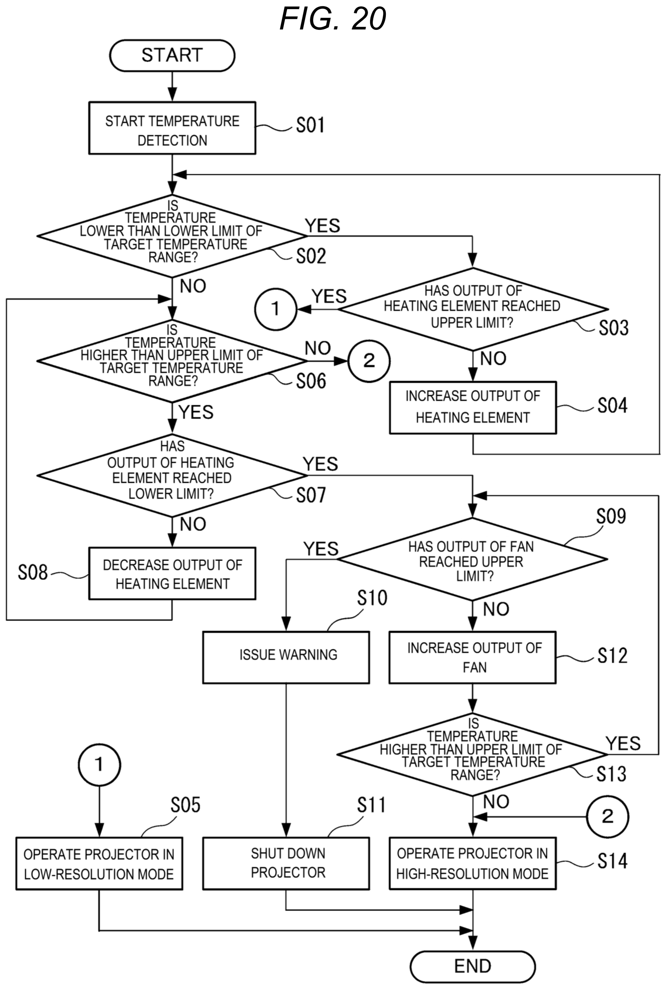

FIG. 20 is a flowchart showing the control process carried out by the controller 73.

The controller 73 shown in FIG. 18 is configured with a processor such as a CPU (central processing unit), and controls the operation of each element of the projector 1 in accordance with a program read from the storage 72. For example, based on the temperature of each of the liquid crystal panels 41 detected by the corresponding temperature sensor 71, the controller 73 carries out a control process of controlling the operation of the heating element 47 and the fans 61 and 62.

Specifically, the controller 73 first starts temperature detection performed by the temperature sensors 71 to acquire a result of the detection performed by the temperature sensors 71 (step S01), as shown in FIG. 20. That is, the controller 73 acquires the temperatures of the liquid crystal panels 41B, 41G, and 41R from the temperature sensors 71B, 71G, and 71R. It is assumed that the controller 73 acquires the temperatures of the liquid crystal panels 41B, 41G, and 41R from the temperature sensors 71B, 71G, and 71R periodically or at a predetermined timing. Specifically, the controller 73 acquires the temperatures of the liquid crystal panels 41B, 41G, and 41R from the temperature sensors 71B, 71G, and 71R at the timing when the controller 73 determines the temperatures of the liquid crystal panels 41B, 41G, and 41R.

The controller 73 then determines whether the acquired temperature of each of the liquid crystal panels 41B, 41G, and 41R is lower than the lower limit of the target temperature range (step S02).

When it is determined in the determination process in step S02 that there is a liquid crystal panel 41 having a temperature lower than the lower limit of the target temperature range (YES in step S02), the controller 73 determines whether the output of the heating element 47, which heats the liquid crystal panel 41, has reached an upper limit (step S03).

When it is determined in the determination process in step S03 that the output of the heating element 47 has not reached the upper limit (NO in step S03), the controller 73 increases the output of the corresponding heating element 47 to strengthen the heating of the liquid crystal panel 41 performed by the heating element 47 (step S04). On the other hand, the controller 73 does not increase the output of a heating element 47 that heats the liquid crystal panel 41 having a temperature that is not lower than the lower limit of the target temperature range.

After step S04, the controller 73 returns to the process in step S02.

When it is determined in the determination process in step S03 that the output of the heating element 47 has reached the upper limit (YES in step S03), the controller 73 causes the projector 1 to operate in a low-resolution mode (step S05). In the determination process, when there is at least one heating element 47 determined that the output has reached the upper limit, the controller 73 determines that the output of the heating element 47 has reached the upper limit, and executes step S05.

In step S05, the controller 73 sets the frame rate at 60 Hz or 120 Hz, and operates the liquid crystal panels 41B, 41G, and 41R. When the frame rate of the liquid crystal panels 41 is 60 Hz, the controller 73 causes the optical path changer 36 to stop operating. For example, when the frame rate of the liquid crystal panels 41 is 120 Hz, the controller 73 sets the frequency at which the optical path changer 36 is driven at 120 Hz in accordance with the frame rate of the liquid crystal panels 41, and reduces the number of the image display positions moved by the optical path changer 36 to two, the first position P1 and the third position P3. A projection image can thus be displayed on the projection receiving surface without deterioration of the image quality, although the resolution of the projection image is lowered as compared with the case where the frame rate of the liquid crystal panels 41 and the frequency at which the optical path changer 36 is driven are 240 Hz. After step 505, the controller 73 terminates the control process.

When it is determined in the determination process in step S02 that there is no liquid crystal panel 41 having a temperature lower than the lower limit of the target temperature range (NO in step S02), the controller 73 determines whether the temperature of each of the liquid crystal panels 41B, 41G, and 41R is higher than the upper limit of the target temperature range (step S06).

When it is determined in the determination process in step S06 that the temperature of each of the liquid crystal panels 41B, 41G, and 41R is not higher than the upper limit of the target temperature range (step S06: NO), the controller 73 transitions to the process in step S14. As will be described later in detail, in step S14, the controller 73 causes the projector 1 to operate in a high-resolution mode. When there is at least one liquid crystal panel 41 having a temperature higher than the upper limit of the target temperature range, the controller 73 determines that the temperature of the liquid crystal panel 41 is higher than the upper limit of the target temperature range.

When it is determined in the determination process in step S06 that there is a liquid crystal panel 41 having a temperature higher than the upper limit of the target temperature range (YES in step S06), the controller 73 determines whether the output of the heating element 47, which heats the liquid crystal panel 41 determined to have the high temperature, has reached the lower limit (step S07).

When it is determined in the determination process in step S07 that the output of the heating element 47 that heats the liquid crystal panel 41 determined to have the high temperature has not reached the lower limit (NO in step S07), the controller 73 decreases the output of the heating element 47 to weaken the heating of the liquid crystal panel 41 performed by the heating element 47 (step S08). On the other hand, the controller 73 does not decrease the output of the heating element 47 that heats the liquid crystal panel 41 having a temperature that is not higher than the upper limit of the target temperature range.

After step S08, the controller 73 returns to the process in step S06.

When it is determined in the determination process in step S07 that the output of the heating element 47 that heats the liquid crystal panel 41 determined to have the high temperature has reached the lower limit (YES in step S07), the controller 73 determines whether the output of either the fan 61 or 62 has reached the upper limit (step S09).

When it is determined in the determination process in step S09 that the output of either the fan 61 or 62 has reached the upper limit (YES in step S09), the controller 73 notifies an operator of an abnormality in temperature by using a predetermined method (step S10). For example, the controller 73 notifies the operator of the abnormality by turning on or blinking an indicator, or causes the light modulator 34 to form an image indicating the abnormality and causes the projection optical apparatus 37 to project the image.

After step S10, the controller 73 shuts down the projector 1 (step S11), and terminates the control process.

When it is determined in the determination process in step S09 that the output of either the fan 61 or 62 has not reached the upper limit (NO in step S09), the controller 73 increases the output of the fan 61 or 62 (step S12). The flow rate of the cooling air flowing through each of the liquid crystal panels 41B, 41G, and 41R thus increases, so that the liquid crystal panels 41B, 41G, and 41R are each cooled at improved efficiency.

After step S12, the controller 73 determines whether the temperature of each of the liquid crystal panels 41B, 41G, and 41R is higher than the upper limit of the target temperature range (step S13), as in step S06.

When it is determined in the determination process in step S13 that there is a liquid crystal panel 41 having a temperature higher than the upper limit of the target temperature range (YES in step S13), the controller 73 returns to the process in step S09. The output of either the fan 61 or 62 is therefore increased unless the output of the fan 61 or 62 has reached the upper limit.

When it is determined in the determination process in step S13 that the temperature of each of the liquid crystal panels 41B, 41G, and 41R is not higher than the upper limit of the target temperature range (NO in step S13), the controller 73 operates the projector 1 in the high resolution mode (step S14). For example, the controller 73 sets the frame rate at 240 Hz, and operates the liquid crystal panels 41B, 41G, and 41R. The controller 73 sets the frequency at which the optical path changer 36 is driven at 240 Hz in accordance with the frame rate of the liquid crystal panels 41, and sets the number of the image display positions moved by the optical path changer 36 to four, the positions P1 to P4. The resolution of the projection image can thus be increased. After step S14, the controller 73 terminates the control process.

The control process described above is repeatedly carried out at a predetermined cycle.

Advantages of first embodiment

The projector 1 according to the present embodiment described above provides the following advantages.

The projector 1 includes the light source 31 and the light modulators 34, which modulate the light output from the light source 31. The light modulators 34 each include the liquid crystal panel 41 and the temperature control unit 45.

The liquid crystal panel 41 includes the liquid crystal layer 422, the light-incident-side substrate 423, the light-exiting-side substrate 424, the light-incident-side dustproof substrate 425, and the light-exiting-side dustproof substrate 426. The light-incident-side substrate 423 is located on the light incident side of the liquid crystal layer 422. The light-exiting-side substrate 424 is located on the light exiting side of the liquid crystal layer 422, and the light-incident-side substrate 423 and the light-exiting-side substrate 424 sandwich the liquid crystal layer 422. The light-incident-side dustproof substrate 425 is a light transmissive substrate, and is located on the light incident side of the light-incident-side substrate 423. The light-exiting-side dustproof substrate 426 is a light transmissive substrate, and is located on the light exiting side of the light-exiting-side substrate 424. The light-exiting-side dustproof substrate 426 and the light-incident-side dustproof substrate 425 sandwich the liquid crystal layer 422, the light-incident-side substrate 423, and the light-exiting-side substrate 424. The size of the light-incident-side dustproof substrate 425 in the plan view is greater than the size of the light-incident-side substrate 423 in the plan view when viewed from the light incident side of the light modulator 34.

The temperature control unit 45 controls the temperature of the liquid crystal layer 422. The temperature control unit 45 is in contact with the light-incident-side dustproof substrate 425.

The configuration described above, in which the size of the light-incident-side dustproof substrate 425 in the plan view is greater than the size of the light-incident-side substrate 423 in the plan view, allows the heat to be readily transferred from the temperature control unit 45 to the light-incident-side substrate 423 via the light-incident-side dustproof substrate 425. The heat can thus be readily transferred to the liquid crystal layer 422 via the light-incident-side substrate 423, so that the temperature of the liquid crystal layer 422 can be quickly adjusted. The temperature of the liquid crystal layer 422 can therefore be controlled more accurately than in a case where the heating element is configured with a transparent electrically conductive film disposed in the region through which the light passes. Furthermore, the temperature of the liquid crystal layer 422 can therefore be quickly raised by the temperature control unit 45, for example, when the temperature of the liquid crystal layer 422 is low, so that the responsiveness of the liquid crystal layer 422 and in turn the responsiveness of the light modulator 34 can be enhanced.

In the projector 1, the thermal conductivity of the light-incident-side dustproof substrate 425 is higher than or equal to the thermal conductivity of the light-incident-side substrate 423.

The configuration described above allows the heat to be readily transferred from the light-incident-side dustproof substrate 425, with which the temperature control unit 45 is in contact, to the light-incident-side substrate 423. The responsiveness of the light modulator 34 can therefore be further enhanced.

In the projector 1, the temperature control unit 45 includes the heat transfer frame 46, which is in contact with the light-incident-side dustproof substrate 425 and supports the light-incident-side dustproof substrate 425, and the heating element 47 provided at the heat transfer frame 46.

The configuration described above can readily suppress the heat of the heating element 47 locally transferred to the light-incident-side dustproof substrate 425 as compared with a case where the heat of the heating element 47 is directly transferred to the light-incident-side dustproof substrate 425. Since the heating element 47 is provided at the heat transfer frame 46, which supports the light-incident-side dustproof substrate 425, the light-incident-side dustproof substrate 425 and the heating element 47 can be supported by the heat transfer frame 46. The light modulator 34 can therefore be more readily assembled.

In the projector 1, the heat transfer frame 46 includes the placement portion 463, which is recessed toward the light-incident-side dustproof substrate 425 and at which the heating element 47 is placed.

The configuration described above allows the heating element 47 to be readily disposed at the heat transfer frame 46. Furthermore, since the placement portion 463 is a recess recessed toward the light-incident-side dustproof substrate 425, the distance between the light-incident-side dustproof substrate 425 and the heating element 47 can be shortened. The heat generated by the heating element 47 can therefore be readily transferred to the light-incident-side dustproof substrate 425, so that the light-incident-side dustproof substrate 425 can be quickly heated.

In the projector 1, the heating element 47 is a frame-shaped element having a passage port through which the light incident on the light-incident-side dustproof substrate 425 passes.

The configuration described above allows the heat generated by the heating element 47 to be transferred to a circumferential edge portion of the light-incident-side dustproof substrate 425 that is a portion located outside the light incident region thereof when viewed from the light incident side of the light-incident-side dustproof substrate 425. The temperature of the entire light-incident-side dustproof substrate 425 and in turn the temperature of the liquid crystal layer 422 can thus be readily raised as compared with a case where the heat is transferred only to the edge of the light-incident-side dustproof substrate 425.

The projector 1 includes the optical path changer 36, which changes the optical path of the light modulated by the light modulators 34. The optical path changer 36 includes the optical member 361, the first holding member 362, the second holding member 363, the base 364, the first actuator 365, and the second actuator 366.

The light modulated by the light modulators 34 enters the optical member 361.

The first holding member 362 holds the optical member 361, and the second holding member 363 holds the first holding member 362 to hold the optical member 361. That is, the first holding member 362 and the second holding member 363 correspond to the holding member in the present disclosure.

The first actuator 365 swings the first holding member 362, and the second actuator 366 swings the second holding member 363.

The light modulators 34 each have the modulation region PA, where incident light is modulated, and the modulation region PA has a rectangular shape having short sides and long sides when viewed from the light incident side.

The heating element 47 is disposed at a position different from those of the actuators 365 and 366 in the +D2 direction along the short sides of the modulation region PA.

The configuration described above, which drives the optical path changer 36 at high speed, allows an increase in the resolution of an image projected by the projector 1.

Furthermore, the configuration in which the heating element 47 is disposed at a position different from those of the actuators 365 and 366 of the optical path changer 36 in the +D2 direction along the short sides of the modulation region PA can suppress an adverse effect of the heat generated by the heating element 47 on the actuators 365 and 366. The optical path changer 36 can therefore be operated in a stable manner.

In the projector 1, the temperature control unit 45 includes the cover member 48, which is provided on the side opposite the heat transfer frame 46 with the heating element 47 interposed therebetween and covers at least a portion of the heating element 47. The thermal conductivity of the cover member 48 is lower than the thermal conductivity of the heat transfer frame 46.

The configuration described above, in which the thermal conductivity of the cover member, which covers at least a portion of the heating element, is lower than the thermal conductivity of the heat transfer frame, allows the heat of the heating element to be readily transferred to the heat transfer frame. The heat generated by the heating element can therefore be readily transferred to the light-incident-side dustproof substrate via the heat transfer frame.

In the projector 1, the cover member 48 has the absorption layer 483, which is provided at the light-incident-side surface 481A of the cover member 48 and absorbs visible light.

The configuration described above, in which the absorption layer 483 absorbs at least part of the light not incident on the light-incident-side dustproof substrate 425, can heat the cover member 48. Therefore, when the liquid crystal layer 422 needs to be heated, not only the heat generated by the heating element 47 but also the heat generated in the absorption layer 483 can be transferred to the liquid crystal layer 422. The liquid crystal layer 422 can therefore be readily heated.

The projector 1 includes the holding frame 44, which is an element separate from the heat transfer frame 46. The holding frame 44 in combination with the heat transfer frame 46 houses the liquid crystal layer 422, the light-incident-side substrate 423, the light-exiting-side substrate 424, the light-incident-side dustproof substrate 425, and the light-exiting-side dustproof substrate 426.

The configuration described above, in which the combination of the heat transfer frame 46 and the holding frame 44 can hold the liquid crystal layer 422, the light-incident-side substrate 423, the light-exiting-side substrate 424, the light-incident-side dustproof substrate 425, and the light-exiting-side dustproof substrate 426, can protect the liquid crystal layer 422, the light-incident-side substrate 423, the light-exiting-side substrate 424, the light-incident-side dustproof substrate 425, and the light-exiting-side dustproof substrate 426.

Furthermore, since the heat transfer frame 46 is an element separate from the holding frame 44, the heat transfer frame 46 can be configured in accordance with the shape of the light-incident-side dustproof substrate 425. Therefore, since the heat transfer frame 46 can be configured to increase the area where the heat transfer frame 46 is in contact with the light-incident-side dustproof substrate 425, the efficiency at which the heat is transferred between the heat transfer frame 46 and the light-incident-side dustproof substrate 425 can be increased.

In the projector 1, the heat transfer frame 46 has the surface 46B as the first surface facing the light incident side of the light modulator 34, the opening 461, through which the light incident on the light-incident-side dustproof substrate 425 passes, and the air guide surface 464A, which extends in the direction away from the opening 461 along the surface 46B and guides the cooling air to the light-incident-side dustproof substrate 425 exposed via the opening 461.

The configuration described above, in which the cooling air can be guided by the air guide surface 464A to the light-incident-side dustproof substrate 425 exposed in the opening 461, can cool the light-incident-side dustproof substrate 425, to which the heat of the liquid crystal layer 422 is transferred via the light-incident-side substrate 423, and can in turn cool the liquid crystal layer 422.

In the projector 1, Expression 1 described above is satisfied, where L represents the dimension of the air guide surface 464A in the +Y direction, θ represents the intersection angle between the air guide surface 464A and the extension surface of the surface 46B, x represents the dimension of the opening 461 in the +Y direction, v represents the kinematic viscosity coefficient of the air, and U represents the speed of the airflow flowing in the +Y direction. Note that the +Y direction corresponds to an air guide direction toward the opening 461 along the air guide surface 464A.

When Expression 1 described above is satisfied, the intersection angle θ and the dimension L described above can be so set that the airflow can efficiently flow toward the light-incident-side dustproof substrate 425 exposed in the opening 461. The efficiency at which the liquid crystal layer 422 is cooled can therefore be improved while the size of the light modulator 34 is reduced.

The projector 1 includes the temperature sensor 71, which is provided in each of the light modulators 34 and detects the temperature of the liquid crystal layer 422, the fans 61 and 62, which cause the cooling gas to flow to the light modulators 34, and the controller 73, which controls the heating element 47 and the fans 61 and 62 based on the temperature of the liquid crystal layer 422 detected by the temperature sensor 71.

The configuration described above can control the state of the driven heating element 47, which heats the liquid crystal layer 422, and the state of the driven fans 61 and 62, which cause the cooling gas that cools the liquid crystal layer 422 to flow, in accordance with the temperature of the liquid crystal layer 422. Therefore, for example, the temperature of the liquid crystal layer 422 can be maintained within a temperature range suitable for driving the liquid crystal layer 422. The liquid crystal layer 422 can therefore maintain a highly responsive state.

Second embodiment

A second embodiment of the present disclosure will next be described.

A projector according to the present embodiment is configured in the same manner as the projector 1 according to the first embodiment, but differs therefrom in the configuration of the optical path changer. Note in the following description that the portions that are the same or substantially the same as the portions having already been described have the same reference characters, and will not be described.

Schematic configuration of projector

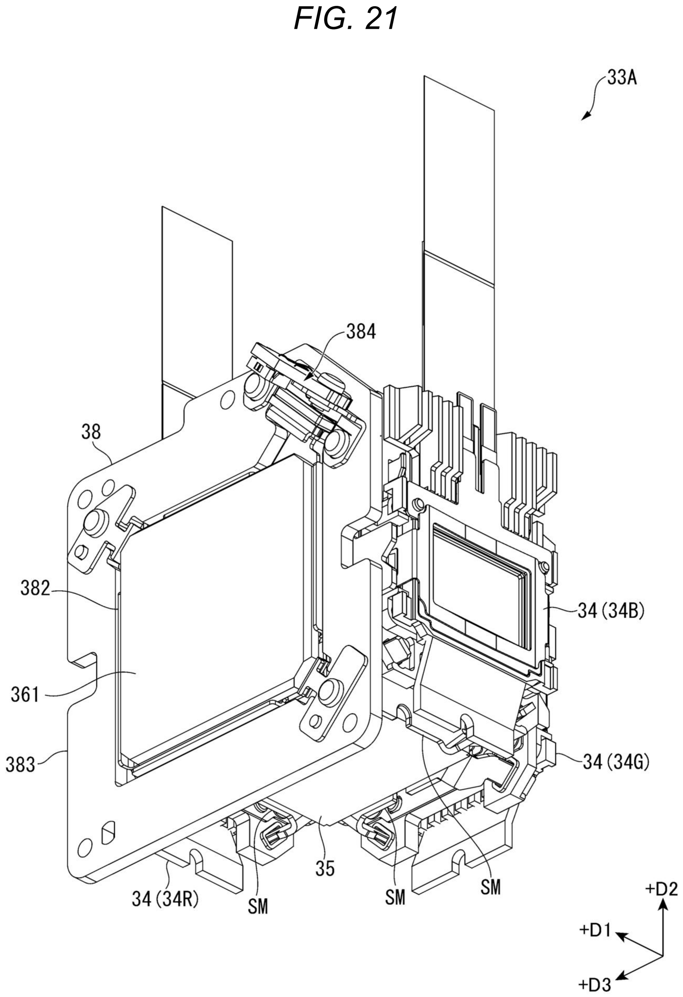

FIG. 21 is a perspective view of an image formation apparatus 33A provided in the projector according to the present embodiment viewed from the side via which the image light PL exits. Note that FIG. 21 does not show the field lenses 331 or the light-incident-side polarizers 332.

The projector according to the present embodiment has elements and functions that are the same as those of the projector 1 according to the first embodiment except that the image formation apparatus 33 is replaced with the image formation apparatus 33A shown in FIG. 21.

Configuration of optical path changer

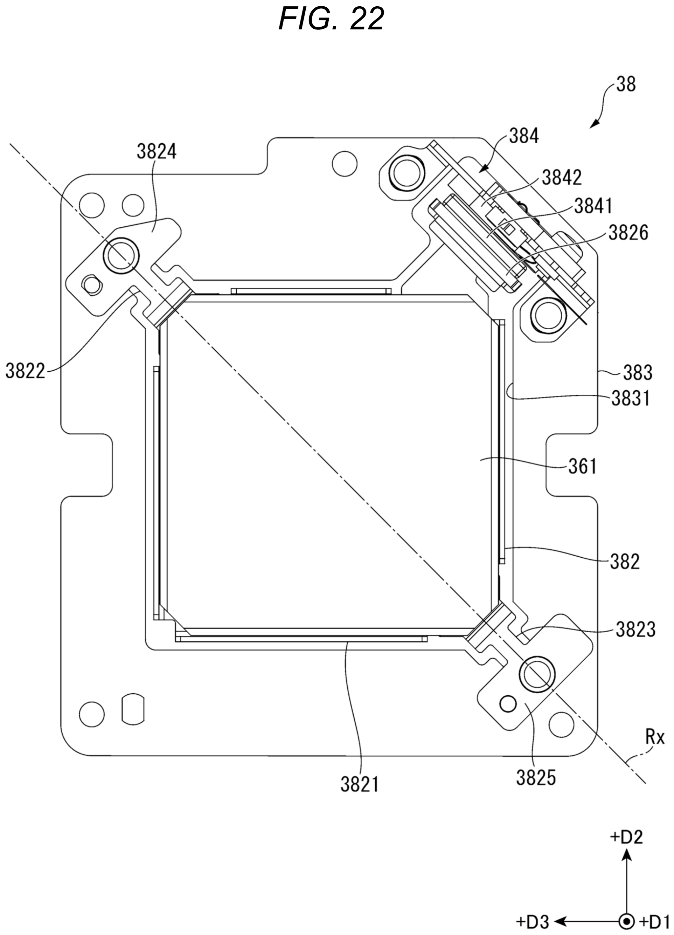

FIG. 22 shows an optical path changer 38 viewed from the side via which the image light PL exits.

The optical path changer 38 is disposed between the light combiner 35 and the projection optical apparatus 37 in the optical path of the image light PL, and shifts the optical path of the image light PL incident from the light combiner 35 to increase the resolution of a projection image displayed by using the image light PL projected onto the projection receiving surface PS, as the optical path changer 36. That is, the optical path changer 38 is disposed on a side of the light combiner 35 that is the side via which the image light PL exits, as shown in FIG. 21.

The optical path changer 38 includes the optical member 361, a holding member 382, a base 383, and an actuator 384, as shown in FIGS. 21 and 22.

In the present embodiment, the optical member 361 is held by the holding member 382, and the actuator 384 operates to cause the optical member 361 to incline with respect to an imaginary plane perpendicular to the optical axis of the light combiner 35 along which the image light PL exits, so that the image light PL is refracted and the optical path thereof is shifted accordingly.

The holding member 382 is a rectangular-frame-shaped member, holds the optical member 361, and is held in a swingable manner by the base 383 around a swing axis Rx, as shown in FIG. 22, as the first holding member 362. The holding member 382 includes a frame portion 3821, shaft portions 3822 and 3823, fixed portions 3824 and 3825, and a support portion 3826. Note that the swing axis Rx is an axis that inclines with respect to each of the +D2 and +D3 directions, and approaches the +D3 direction as extending in the +D2 direction.

The frame portion 3821 surrounds and supports the optical member 361. The frame portion 3821 has an opening which is not shown but through which the light passing through the optical member 361 passes.

The shaft portion 3822 protrudes from the outer circumference of the frame portion 3821 in the +D2 direction and the +D3 direction, and the shaft portion 3823 protrudes from the outer circumference of the frame portion 3821 in the -D2 direction and the -D3 direction.

The fixed portion 3824 is provided at the tip of the shaft portion 3822, and the fixed portion 3825 is provided at the tip of the shaft portion 3823. Fixing the fixed portions 3824 and 3825 to the base 383 causes the holding member 382 to be supported in a swingable manner by the base 383 around the swing axis Rx.

The support portion 3826 is provided at a corner of the outer circumference of the frame portion 3821 that is the corner facing the positive end in the D2 direction and the negative end in the D3 direction. The support portion 3826 supports a magnet 3841, which constitutes the actuator 384. Note that the support portion 3826 is made of metal and functions as a back yoke of the magnet 3841 supported by the support portion 3826.

The base 383 holds the holding member 382 in a swingable manner around the swing axis Rx, and further holds a coil 3842 of the actuator 384. The base 383 is a frame-shaped element, and has an opening 3831, in which the holding member 382 is disposed.

The actuator 384 swings the holding member 382 around the swing axis Rx to swing the optical member 361 around the swing axis Rx. The actuator 384 includes the magnet 3841 and the coil 3842. That is, the actuator 384 is a voice coil motor including the magnet 3841 fixed to the holding member 382 and the coil 3842 fixed to the base 383.

When the control apparatus 7 supplies the coil 3842 with an alternating current, the optical member 361 held by the holding member 382 is swung around the swing axis Rx.

Optical path shifted by optical path changer

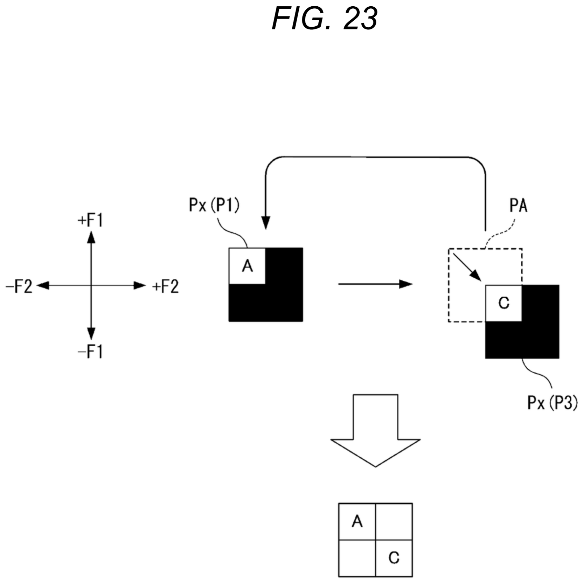

FIG. 23 illustrates the optical path of the image light shifted by the optical path changer 38.

The optical path changer 38 changes the posture of the optical member 361, through which the image light PL passes, to refract the image light PL in the optical member 361 to shift the optical path of the image light PL.

Specifically, the optical path changer 38 causes the actuator 384 to swing the optical member 361 around the swing axis Rx to shift the optical path of the image light PL in a direction perpendicular to the swing axis Rx when viewed from a side of the optical path changer 38 that is the side via which the image light PL is incident. The pixel Px of a projection image displayed on the projection receiving surface PS is thus shifted in the +F1 direction and the -F2 direction, in which the pixel Px is shifted to the first position P1, and in the -F1 direction and the +F2 direction, in which the pixel Px is shifted to the third position P3, as shown in FIG. 23.

The control apparatus 7 causes the optical path changer 38 to combine the operation of shifting the pixel Px in the +F1 direction and the -F2 direction and the operation of shifting the pixel Px in the -F1 direction and the +F2 direction with each other to increase an apparent number of pixels for a high-resolution projection image.

For example, the control apparatus 7 causes the optical path changer 38 to shift the optical path of the image light to move the pixel Px to a position shifted by half a pixel in each of the -F1 direction and the +F2 direction. Note that the half a pixel indicates the half size of the pixel Px.

The position where the pixel Px is displayed on the projection receiving surface PS is thus shifted from the position P1, which is a reference position, to the position P3 shifted by half a pixel in the -F1 direction and the +F2 direction.

The control apparatus 7 thus causes the optical path changer 38 to shift the optical path of the image light PL in a way that the pixel Px is displayed at each of the positions P1 and P3 for a fixed period, and changes the content displayed by each of the liquid crystal panels 41B, 41G, and 41R in synchronization with the optical path shift. The pixels A and C having a size smaller in appearance than the size of the pixel Px can thus be displayed.

For example, to display the pixels A and C as a whole at the frequency of 60 Hz, the content displayed by each of the liquid crystal panels 41B, 41G, and 41R needs to be switched from one to another in correspondence with the positions P1 and P3 at a speed twice as high as 60 Hz. In this case, setting the frame rate of each of the liquid crystal panels 41 at 120 Hz, and causing the liquid crystal panel 41 to sequentially form the image light containing the pixel A displayed at the first position P1 and the image light containing the pixel C displayed at the third position P3 allow a projection image having high apparent resolution to be displayed.

Positional relationship between heating element and actuator

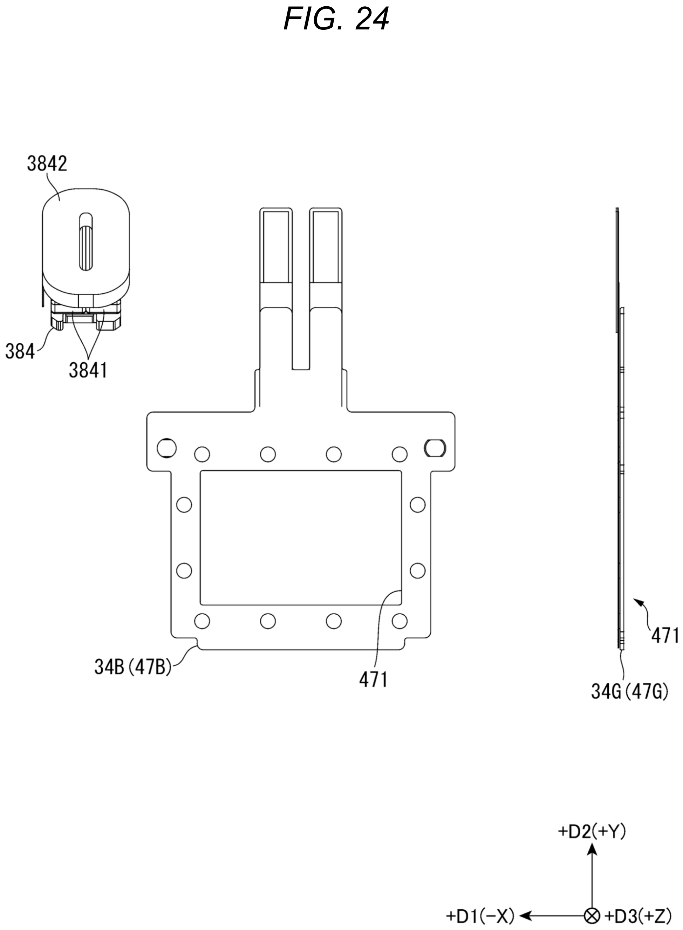

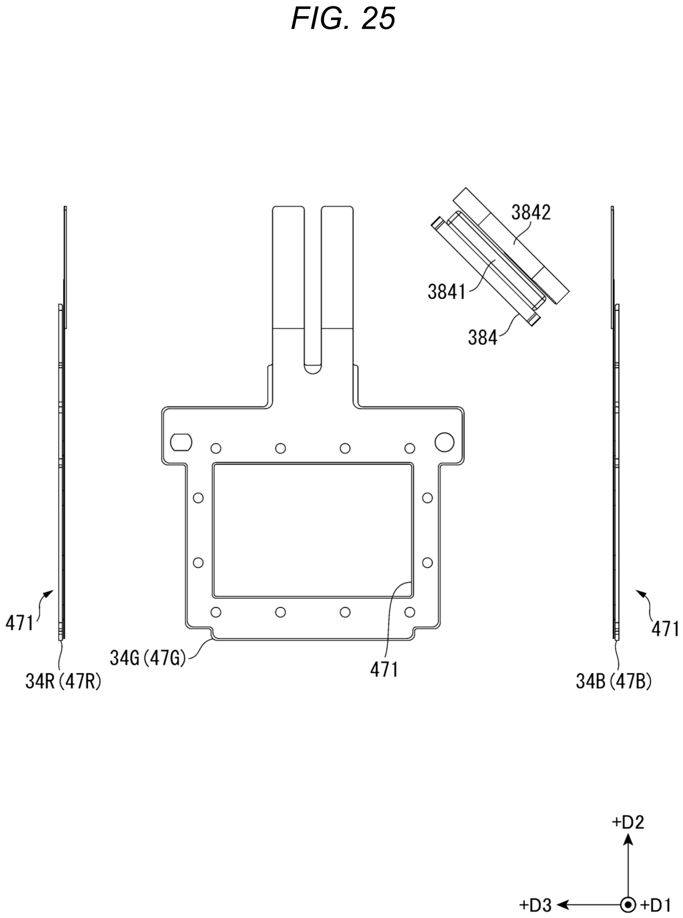

FIG. 24 shows the positional relationship between the heating element 47 in each of the light modulators 34B and 34G and the actuator 384 of the optical path changer 38 viewed from the blue light incident side. FIG. 25 shows the positional relationship between the heating element 47 in each of the light modulators 34B, 34G, and 34R and the actuator 384 viewed from the light exiting side of the optical path changer 38. FIG. 24 shows arrows indicating the +D1, +D2, and +D3 directions, and arrows indicating the +X, +Y, and +Z directions in the light modulators 34B.

In the present embodiment, the heating element 47 provided in the light modulator 34B closest to the actuator 384 out of the three light modulators 34B, 34G, and 34R is disposed at a position separate from the actuator 384 in the +D2 direction, as shown in FIGS. 24 and 25.

As described above, the heating element 47 of the light modulator 34B is provided at a position where the heating element 47 surrounds the modulation region PA of the light modulator 34B, which is the region through which the blue light passes. The actuator 384 is disposed at a position shifted in the +D2 direction from the optical member 361, through which the image light PL passes, in the optical path changer 38, as shown in FIG. 22. The +D2 direction is a direction along the short sides of the modulation region PA of the light modulator 34B, as described above. The heating element 47 of the light modulator 34B is therefore disposed at a position separate from the actuator 384 in the -D2 direction.

The configuration described above in which the actuator 384 and the heating element 47 of the light modulator 34B closest to the actuator 384 are disposed separate from each other in the +D2 direction allows suppression of the thermal influence of the heating element 47 of the light modulator 34B on the magnet 3841 of the actuator 384.

Note that the heating element 47 of the light modulator 34G is disposed at a position separate from the actuator 384 not only in the -D2 direction but also in the -D1 direction.

The heating element 47 of the light modulator 34R is disposed at a position separate from the actuator 384 not only in the -D2 direction but also in the +D3 direction.

The heat generated by the heating elements 47 of the light modulators 34G and 34R therefore does not greatly affect the actuator 384.

Occurrence of demagnetization of the magnet 3841 of the actuator 384 can therefore be suppressed, so that a situation in which the heat hinders the operation of the optical path changer 38 can be suppressed.

The projector according to the present embodiment described above can provide the same advantages provided by the projector 1 according to the first embodiment.

Variations of embodiments

The present disclosure is not limited to each of the embodiments described above, and changes, improvements, and modifications to the extent that the object of the present disclosure can be achieved should fall within the scope of the present disclosure.

It is assumed in each of the embodiments described above that the thermal conductivity of the light-incident-side dustproof substrate 425 is higher than or equal to the thermal conductivity of the light-incident-side substrate 423, but not necessarily. The thermal conductivity of the light-incident-side dustproof substrate 425 may be lower than the thermal conductivity of the light-incident-side substrate 423.

It is assumed in each of the embodiments described above that the temperature control unit 45 includes the heat transfer frame 46, the heating element 47, and the cover member 48. The configuration of the temperature control unit 45 is, however, not limited to the configuration described above. For example, the temperature control unit 45 may not include the heat transfer frame 46 or the cover member 48, and the heating element 47 may be provided in direct contact with the light-incident-side dustproof substrate 425. In this case, the heating element 47 may be in contact with a surface of the light-incident-side dustproof substrate 425 excluding the light incident surface 425A. Further, in this case, a frame that is disposed on the light incident side of the panel body 42 and combined with the holding frame 44 may be provided.

It is assumed in each of the embodiments described above that the heating element 47 transfers heat to the light incident surface 425A of the light-incident-side dustproof substrate 425 via the heat transfer frame 46. In other words, it is assumed that the contact portion 462 of the heat transfer frame 46, to which heat is transferred from the heating element 47, is in contact with the light incident surface 425A of the light-incident-side dustproof substrate 425 in a heat transferable manner, but not necessarily. The contact portion 462 may be in contact, for example, with a side surface of the light-incident-side dustproof substrate 425 that is the side surface that couples the light incident surface 425A to the light-exiting-side surface. That is, a surface of the light-incident-side dustproof substrate 425 that is the surface with which the heat transfer frame 46 is in contact is not limited to the light incident surface 425A, and may be another surface.

It is assumed in each of the embodiments described above that the heat transfer frame 46 includes the recessed placement portion 463 recessed from the light-incident-side surface 46B of the heat transfer frame 46 toward the light-incident-side dustproof substrate 425, and that the heating element 47 is placed at the placement portion 463, but not necessarily. The placement portion 463, at which the heating element 47 is placed, may not be recessed from the surface 46B toward the light-incident-side dustproof substrate 425.

It is assumed in each of the embodiments described above that the heating element 47 is a rectangular-frame-shaped element having the passage port 471, through which the light incident on the light-incident-side dustproof substrate 425 passes, but not necessarily. The shape of the heating element 47 can be changed as appropriate. For example, the heating element 47 may be a heating element linearly extending along at least one edge of the modulation region PA. In this case, the temperature control unit 45 may include multiple heating elements 47. Further in this case, the heating element 47 may, for example, include two heating elements extending along the two long sides and two heating elements extending along the two short sides out of the four sides of the modulation region PA.

It is assumed in the first embodiment described above that the optical path changer 36 includes the optical member 361, the first holding member 362 and the second holding member 363 as a holding member, the base 364, and the first actuator 365 and the second actuator 366 as an actuator that swings the holding member. It is assumed in the second embodiment described above that the optical path changer 38 includes the optical member 361, the holding member 382, the base 383, and the actuator 384. The configurations and arrangements of the optical path changers 36 and 38 are, however, not limited to those described above. For example, the optical path changers 36 and 38 may each swing the optical member 361 by using another actuator such as a motor or a solenoid.

The first swing axis Rx1 of the optical path changer 36 extends along the +D3 direction, and the second swing axis Rx2 extends along the +D2 direction, but not necessarily. The first swing axis Rx1 may intersect with each of the +D2 direction and the +D3 direction, and the second swing axis Rx2 may intersect with the first swing axis Rx1 and intersect with each of the +D2 direction and the +D3 direction.

Similarly, the swing axis Rx of the optical path changer 38 may extend along the +D2 direction or the +D3 direction, or may extend along an axis that is the swing axis Rx shown in FIG. 22 but reversed with respect to an axis along the +D2 direction.

It is assumed in the first embodiment described above that the heating element 47 is disposed at a position different from the positions of the first actuator 365 and the second actuator 366 in the +D2 direction along the short sides of the modulation region PA. Specifically, it is assumed that the heating element 47 is disposed at a position shifted in the -D2 direction from the first actuator 365 and the second actuator 366. It is assumed in the second embodiment described above that the heating element 47 is disposed at a position different from the position of the actuator 384 in the +D2 direction along the short sides of the modulation region PA. Specifically, it is assumed that the heating element 47 is disposed at a position shifted in the -D2 direction from the actuator 384. The assumptions described above are, however, not necessarily satisfied, and the heating element 47 according to the first embodiment may instead be disposed at a position shifted in the +D2 direction from each of the actuators 365 and 366, and the heating element 47 according to the second embodiment may instead be disposed at a position shifted in the +D2 direction from the actuator 384. Still instead, the heating element 47 may be disposed at the same position as the actuators 365, 366, and 384 in the +D2 direction.

It is assumed in each of the embodiments described above that the temperature control unit 45 includes the cover member 48, which covers a portion of the heating element 47, and that the thermal conductivity of the cover member 48 is lower than the thermal conductivity of the heat transfer frame 46. The cover member 48 may, however, be omitted, as described above. Furthermore, the thermal conductivity of the cover member 48 may be higher than or equal to the thermal conductivity of the heat transfer frame 46.

It is assumed in each of the embodiments described above that the cover member 48 has the absorption layer 483, which absorbs visible light, but not necessarily. The absorption layer 483 may be omitted. The absorption layer 483 may absorb ultraviolet rays.

It is assumed in each of the embodiments described above that the light modulators 34 each include the holding frame 44, which is configured to be separate from the heat transfer frame 46 and combined with the heat transfer frame 46 to house the panel body 42, but not necessarily. The heat transfer frame 46 may instead hold the panel body 42. In this case, the holding frame 44 may be omitted.

It is assumed in each of the embodiments described above that the heat transfer frame 46 has the opening 461, through which the light incident on the light-incident-side dustproof substrate 425 passes and which exposes the light-incident-side dustproof substrate 425, and the air guide surface 464A, which guides the cooling air to the light-incident-side dustproof substrate 425, but not necessarily. The air guide surface 464A may be omitted.

It is assumed in each of the embodiments described above that the heat transfer frame 46 having the air guide surface 464A satisfies Expression 1 described above, but not necessarily. For example, when the space located in a portion shifted in the -D2 direction from each of the light modulators 34 is sufficiently large, Expression 1 described above may not be necessarily satisfied.

It is assumed in each of the embodiments described above that the projector includes the temperature sensor 71, which is provided at the light-exiting-side substrate 424 of each of the light modulator 34 and detects the temperature of the liquid crystal layer 422, the fans 61 and 62, which send the cooling gas to the light modulator 34, and the controller 73, which controls the heating element 47 and the fans 61 and 62 based on the temperature of the liquid crystal layer 422 detected by the temperature sensor 71, but not necessarily. The controller 73 may not need to control none of the heating element 47 and the fans 61 and 62 based on the temperature of the liquid crystal layer 422.

The fans that send the cooling gas to the light modulators 34 may be one fan or three or more fans. For example, the stream of the cooling gas sent from one fan may be divided into multiple streams of the cooling gas and caused to flow to the light modulators 34, or the stream of the cooling gas sent from each of three fans may be caused to flow to the corresponding light modulator 34.

It is assumed in each of the embodiments described above that the temperature sensor 71 is provided at the light-exiting-side substrate 424, but not necessarily. The temperature sensor 71 in each of the light modulators 34 may be disposed at any portion where the temperature of the liquid crystal layer 422 can be detected, and the temperature sensor 71 may, for example, be provided at the light-incident-side substrate 423.

The temperature sensor 71 may not necessarily be provided in a portion upstream of the modulation region PA along the cooling air. For example, the temperature sensor 71 may be provided in a portion downstream of the modulation region PA along the cooling air, or may be provided at a position shifted from the modulation region PA in a direction perpendicular to the flowing direction of the cooling air when viewed from the light incident side or the light exiting side.

It is assumed in each of the embodiments described above that the projector 1 includes the three light modulators 34B, 34G, and 34R, but not necessarily. The present disclosure is also applicable to a projector including two or fewer light modulators, or four or more light modulators.

It is assumed in each of the embodiments described above that the image projection apparatus 3 has the configuration shown in FIG. 1, but not necessarily. The type, the number, and the layout of the optical components that constitute the image projection apparatus 3 can be changed as appropriate.

Summary of present disclosure

The present disclosure will be summarized below as additional remarks.

Additional Remark 1

A projector including:

a light source; and
a light modulator configured to modulate light output from the light source,
wherein the light modulator includes
a liquid crystal layer,
a light-incident-side substrate located on a light incident side of the liquid crystal layer,
a light-exiting-side substrate located on a light exiting side of the liquid crystal layer, the light-exiting-side substrate and the light-incident-side substrate sandwiching the liquid crystal layer,
a light-incident-side dustproof substrate that is a light transmissive substrate and located on a light incident side of the light-incident-side substrate,
a light-exiting-side dustproof substrate that is a light transmissive substrate, and located on a light exiting side of the light-exiting-side substrate, the light-exiting-side dustproof substrate and the light-incident-side dustproof substrate sandwiching the liquid crystal layer, the light-incident-side substrate, and the light-exiting-side substrate, and
a temperature control unit configured to control a temperature of the liquid crystal layer,
a size of the light-incident-side dustproof substrate in a plan view is greater than a size of the light-incident-side substrate in the plan view when viewed from a light incident side of the light modulator, and the temperature control unit is in contact with the light-incident-side dustproof substrate.

The configuration described above, in which the size of the light-incident-side dustproof substrate in the plan view is greater than the size of the light-incident-side substrate in the plan view, allows heat to be readily transferred from the temperature control unit to the light-incident-side substrate via the light-incident-side dustproof substrate. The heat can thus be readily transferred to the liquid crystal layer via the light-incident-side substrate, so that the temperature of the liquid crystal layer can be quickly adjusted. The temperature of the liquid crystal layer can therefore be controlled more accurately than in a case where a heating element is configured with a transparent electrically conductive film disposed in a region through which the light passes. Furthermore, the temperature of the liquid crystal layer can therefore be quickly raised by the temperature control unit, for example, when the temperature of the liquid crystal layer is low, so that the responsiveness of the liquid crystal layer and in turn the responsiveness of the light modulator can be enhanced.

Additional Remark 2

The projector according to Additional Remark 1, wherein
thermal conductivity of the light-incident-side dustproof substrate is higher than or equal to thermal conductivity of the light-incident-side substrate.
The configuration described above allows the heat to be readily transferred from the light-incident-side dustproof substrate, with which the temperature control unit is in contact, to the light-incident-side substrate. The responsiveness of the light modulator can therefore be further enhanced.

Additional Remark 3

The projector according to Additional Remark 1 or 2, wherein

the temperature control unit includes
a heat transfer frame that is in contact with the light-incident-side dustproof substrate and is configured to support the light-incident-side dustproof substrate, and
a heating element provided at the heat transfer frame.

The configuration described above can readily suppress the heat of the heating element locally transferred to the light-incident-side dustproof substrate as compared with a case where the heat of the heating element is directly transferred to the light-incident-side dustproof substrate. Since the heating element is provided at the heat transfer frame, which supports the light-incident-side dustproof substrate, the light-incident-side dustproof substrate and the heating element can be supported by the heat transfer frame. The light modulator can therefore be more readily assembled.

Additional Remark 4

The projector according to Additional Remark 3, wherein
the heat transfer frame includes a placement portion which is recessed toward the light-incident-side dustproof substrate and at which the heating element is placed.
The configuration described above allows the heating element to be readily disposed at the heat transfer frame. Furthermore, since the placement portion is a recess recessed toward the light-incident-side dustproof substrate, the distance between the light-incident-side dustproof substrate and the heating element can be shortened. The heat generated by the heating element can therefore be readily transferred to the light-incident-side dustproof substrate, so that the light-incident-side dustproof substrate can be quickly heated.

Additional Remark 5

The projector according to Additional Remark 3 or 4, wherein
the heating element is a frame-shaped element having a passage port through which light incident on the light-incident-side dustproof substrate passes.
The configuration described above allows the heat generated by the heating element to be transferred to a circumferential edge portion of the light-incident-side dustproof substrate that is a portion located outside the light incident region thereof when viewed from the light incident side of the light-incident-side dustproof substrate. The temperature of the entire light-incident-side dustproof substrate and in turn the temperature of the liquid crystal layer can thus be readily raised as compared with a case where the heat is transferred only to the edge of the light-incident-side dustproof substrate.

Additional Remark 6

The projector according to any one of Additional Remarks 3 to 5, further including

an optical path changer configured to change an optical path of the light modulated by the light modulator,
wherein the optical path changer includes
an optical member on which the light modulated by the light modulator is incident,
a holding member configured to hold the optical member, and
an actuator configured to swing the holding member,

the light modulator has a modulation region where incident light is modulated,

the modulation region has a rectangular shape having short sides and long sides when viewed from a light incident side, and

the heating element is disposed at a position different from a position of the actuator in a direction along the short sides.

The configuration described above, which drives the optical path changer at high speed, allows an increase in the resolution of an image projected by the projector.

Furthermore, the configuration in which the heating element is disposed at a position different from the position of the actuator of the optical path changer in the direction along the short sides of the modulation region can suppress an adverse effect of the heat generated by the heating element on the actuator. The optical path changer can therefore be operated in a stable manner.

Additional Remark 7

The projector according to any one of Additional Remarks 3 to 6, wherein

the temperature control unit includes a cover member provided on a side opposite the heat transfer frame with the heating element interposed therebetween, and configured to cover at least a portion of the heating element, and

thermal conductivity of the cover member is lower than thermal conductivity of the heat transfer frame.

The configuration described above, in which the thermal conductivity of the cover member, which covers at least a portion of the heating element, is lower than the thermal conductivity of the heat transfer frame, allows the heat of the heating element to be readily transferred to the heat transfer frame. The heat generated by the heating element can therefore be readily transferred to the light-incident-side dustproof substrate via the heat transfer frame.

Additional Remark 8

The projector according to Additional Remark 7, wherein

the cover member has an absorption layer provided at a light-incident-side surface of the cover member and configured to absorb visible light.

The configuration described above, in which the absorption layer absorbs at least part of the light not incident on the light-incident-side dustproof substrate, can heat the cover member. Therefore, when the liquid crystal layer needs to be heated, not only the heat generated by the heating element but also the heat generated in the absorption layer can be transferred to the liquid crystal layer. The liquid crystal layer can therefore be readily heated.

Additional Remark 9

The projector according to any one of Additional Remarks 3 to 8, further including

a holding frame that is an element separate from the heat transfer frame, and is combined with the heat transfer frame to house the liquid crystal layer, the light-incident-side substrate, the light-exiting-side substrate, the light-incident-side dustproof substrate, and the light-exiting-side dustproof substrate.

The configuration described above, in which the combination of the heat transfer frame and the holding frame can hold the liquid crystal layer, the light-incident-side substrate, the light-exiting-side substrate, the light-incident-side dustproof substrate, and the light-exiting-side dustproof substrate, can protect the liquid crystal layer, the light-incident-side substrate, the light-exiting-side substrate, the light-incident-side dustproof substrate, and the light-exiting-side dustproof substrate.

Furthermore, since the heat transfer frame is an element separate from the holding frame, the heat transfer frame can be configured in accordance with the shape of the light-incident-side dustproof substrate. Therefore, since the heat transfer frame can be configured to increase the area where the heat transfer frame is in contact with the light-incident-side dustproof substrate, the efficiency at which the heat is transferred between the heat transfer frame and the light-incident-side dustproof substrate can be increased.

Additional Remark 10

The projector according to any one of Additional Remarks 3 to 9, wherein

the heat transfer frame has
a first surface facing a light incident side,
an opening through which light incident on the light-incident-side dustproof substrate passes, and
an air guide surface extending in a direction away from the opening along the first surface and configured to guide cooling air to the light-incident-side dustproof substrate exposed via the opening.

The configuration described above, in which the cooling air can be guided by the air guide surface to the light-incident-side dustproof substrate exposed in the opening, can cool the light-incident-side dustproof substrate, to which heat of the liquid crystal layer is transferred via the light-incident-side substrate, and can in turn cool the liquid crystal layer.

Additional Remark 11

The projector according to Additional Remark 10, wherein Expression 2 below is satisfied,

$$L \times \tan\theta \leq 10 \times (4.91x^{1/2} \times (v/U)^{1/2}) \dots (2)$$

where L represents a dimension of the air guide surface in an air guide direction toward the opening along the air guide surface, θ represents an intersection angle between the air guide surface and an extension surface of the first surface, x represents a dimension of the opening in the air guide direction, v represents a kinematic viscosity coefficient of air, and U represents a speed of an airflow flowing in the air guide direction.

When Expression 1 is satisfied, the intersection angle θ and the dimension L described above can be so set that the airflow can efficiently flow toward the light-incident-side dustproof substrate exposed in the opening. The efficiency at which the liquid crystal layer is cooled can therefore be improved while the size of the light modulator is reduced.

Additional Remark 12

The projector according to any one of Additional Remarks 3 to 11, further including

a temperature sensor provided at the light modulator and configured to detect the temperature of the liquid crystal layer,
a fan configured to cause a cooling gas to flow to the light modulator, and
a controller configured to control the heating element and the fan based on the temperature of the liquid crystal layer detected by the temperature sensor.

The configuration described above can control the state of the driven heating element, which heats the liquid crystal layer, and the state of the driven fan, which causes the cooling gas that cools the liquid crystal layer to flow, in accordance with the temperature of the liquid crystal layer. Therefore, for example, the temperature of the liquid crystal layer can be maintained within a temperature range suitable for driving the liquid crystal layer. The liquid crystal layer can therefore maintain a highly responsive state.

Additional Remark 13

A light modulator including:

a liquid crystal layer;
a light-incident-side substrate located on a light incident side of the liquid crystal layer;
a light-exiting-side substrate located on a light exiting side of the liquid crystal layer, the light-exiting-side substrate and the light-incident-side substrate sandwiching the liquid crystal layer;
a light-incident-side dustproof substrate that is a light transmissive substrate and located on a light incident side of the light-incident-side substrate;
a light-exiting-side dustproof substrate that is a light transmissive substrate, and located on a light exiting side of the light-exiting-side substrate, the light-exiting-side dustproof substrate and the light-incident-side dustproof substrate sandwiching the liquid crystal layer, the light-incident-side substrate, and the light-exiting-side substrate; and
a temperature control unit configured to control a temperature of the liquid crystal layer,
wherein a size of the light-incident-side dustproof substrate in a plan view is greater than a size of the light-incident-side substrate in the plan view, and the temperature control unit is in contact with the light-incident-side dustproof substrate.

The thus configured light modulator employed in a projector can provide the same advantages provided by the projector described above.

**Claims**

1. A projector comprising:

a light source; and
a light modulator configured to modulate light output from the light source,
wherein the light modulator includes
a liquid crystal layer,
a light-incident-side substrate located on a light incident side of the liquid crystal layer,
a light-exiting-side substrate located on a light exiting side of the liquid crystal layer, the light-exiting-side substrate and the light-incident-side substrate sandwiching the liquid crystal layer,
a light-incident-side dustproof substrate that is a light transmissive substrate and located on a light incident side of the light-incident-side substrate,
a light-exiting-side dustproof substrate that is a light transmissive substrate, and located on a light exiting side of the light-exiting-side substrate, the light-exiting-side dustproof substrate and the light-incident-side dustproof substrate sandwiching the liquid crystal layer, the light-incident-side substrate, and the light-exiting-side substrate, and
a temperature control unit configured to control a temperature of the liquid crystal layer,
a size of the light-incident-side dustproof substrate in a plan view is greater than a size of the light-incident-side substrate in the plan view when viewed from a light incident side of the light modulator, and
the temperature control unit is in contact with the light-incident-side dustproof substrate.

2. The projector according to claim 1, wherein thermal conductivity of the light-incident-side dustproof substrate is higher than or equal to thermal conductivity of the light-incident-side substrate.

3. The projector according to claim 1, wherein

the temperature control unit includes
a heat transfer frame that is in contact with the light-incident-side dustproof substrate and is configured to support the light-incident-side dustproof substrate, and
a heating element provided at the heat transfer frame.

4. The projector according to claim 3, wherein the heat transfer frame includes a placement portion which is recessed toward the light-incident-side dustproof substrate and at which the heating element is placed.

5. The projector according to claim 3, wherein the heating element is a frame-shaped element having a passage port through which light incident on the light-incident-side dustproof substrate passes.

6. The projector according to any one of claim 3, further comprising

an optical path changer configured to change an optical path of the light modulated by the light modulator,
wherein the optical path changer includes
an optical member on which the light modulated by the light modulator is incident,
a holding member configured to hold the optical member, and
an actuator configured to swing the holding member,
the light modulator has a modulation region where incident light is modulated,
the modulation region has a rectangular shape having short sides and long sides when viewed from a light incident side, and
the heating element is disposed at a position different from a position of the actuator in a direction along the short sides.

7. The projector according to claim 3, wherein

the temperature control unit includes a cover member provided on a side opposite the heat transfer frame with the heating element interposed therebetween, and configured to cover at least a portion of the heating element, and thermal conductivity of the cover member is lower than thermal conductivity of the heat transfer frame.

8. The projector according to claim 7, wherein the cover member has an absorption layer provided at a light-incident-side surface of the cover member and configured to absorb visible light.

9. The projector according to claim 3, further comprising
a holding frame that is an element separate from the heat transfer frame, and is combined with the heat transfer frame to house the liquid crystal layer, the light-incident-side substrate, the light-exiting-side substrate, the light-incident-side dustproof substrate, and the light-exiting-side dustproof substrate.

10. The projector according to claim 3, wherein

the heat transfer frame has
a first surface facing a light incident side,
an opening through which light incident on the light-incident-side dustproof substrate passes, and
an air guide surface extending in a direction away from the opening along the first surface and configured to guide cooling air to the light-incident-side dustproof substrate exposed via the opening.

11. The projector according to claim 10, wherein Expression 1 below is satisfied,

$$L \times \tan\theta \le 10 \times (4.91x^{1/2} \times (v/U)^{1/2}) \,...\, (1)$$

where L represents a dimension of the air guide surface in an air guide direction toward the opening along the air guide surface, $\theta$ represents an intersection angle between the air guide surface and an extension surface of the first surface, x represents a dimension of the opening in the air guide direction, v represents a kinematic viscosity coefficient of air, and U represents a speed of an airflow flowing in the air guide direction.

12. The projector according to claim 3, further comprising

a temperature sensor provided at the light modulator and configured to detect the temperature of the liquid crystal layer,
a fan configured to cause a cooling gas to flow to the light modulator, and
a controller configured to control the heating element and the fan based on the temperature of the liquid crystal layer detected by the temperature sensor.

13. A light modulator comprising:

a liquid crystal layer;
a light-incident-side substrate located on a light incident side of the liquid crystal layer;
a light-exiting-side substrate located on a light exiting side of the liquid crystal layer, the light-exiting-side substrate and the light-incident-side substrate sandwiching the liquid crystal layer;
a light-incident-side dustproof substrate that is a light transmissive substrate and located on a light incident side of the light-incident-side substrate;
a light-exiting-side dustproof substrate that is a light transmissive substrate, and located on a light exiting side of the light-exiting-side substrate, the light-exiting-side dustproof substrate and the light-incident-side dustproof substrate sandwiching the liquid crystal layer, the light-incident-side substrate, and the light-exiting-side substrate; and
a temperature control unit configured to control a temperature of the liquid crystal layer,
wherein a size of the light-incident-side dustproof substrate in a plan view is greater than a size of the light-incident-side substrate in the plan view, and
the temperature control unit is in contact with the light-incident-side dustproof substrate.

# FIG. 1

# FIG. 2

# FIG. 3

FIG. 4

# FIG. 5

FIG. 6

EP 4 776 061 A1

FIG. 7

FIG. 8

34 (4)

41

472, 473

45

465

47

44

462

48

461

42

422
423
424
421

471

426

425

442

441

481A

463

464A

+Y

+Z

+X

464

# FIG. 9

# FIG. 10

## FIG. 11

EP 4 776 061 A1

# FIG. 12

366 (366B)

3663

3652

3651    365

3664

34B (47)

471

471

34G (47)

+D2(+Y)

+D1(−X) ← ⊗ +D3(+Z)

# FIG. 13

366 (366A)

3661

3652

3651

365

3663

471

34G (47)

471

34R (47)

+D2(+Y)

+D3(−Z) ⊙ → +D1(+X)

# FIG. 14

# FIG. 15

## FIG. 16

FIG. 17

# FIG. 18

EP 4 776 061 A1

# FIG. 19

46

# FIG. 20

## FIG. 21

# FIG. 22

# FIG. 23

# FIG. 24

3842

384

3841

34B (47B)

471

471

34G (47G)

+D2(+Y)

+D1(−X) ← ⊗ +D3(+Z)

# FIG. 25

## EUROPEAN SEARCH REPORT

**Application Number**

EP 26 15 0469

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2010 271344 A (SEIKO EPSON CORP) 2 December 2010 (2010-12-02) * paragraphs [0023], [0027], [0038], [0050]; figures 1, 2, 3, 5, 6 * ----- | 1,2 | INV. G03B21/00 G02F1/1333 G03B21/16 H04N9/31 G02B7/00 H04N5/74 |
| X | US 2003/147036 A1 (KAISE KIKUO [JP] ET AL) 7 August 2003 (2003-08-07) | 1 | |
| Y | * paragraph [0034]; figures 1, 3 * * paragraph [0049] * * paragraph [0069] * ----- | 1-4,6,7, 9-13 | |
| Y | US 2024/168235 A1 (KADOTANI NORIKAZU [JP] ET AL) 23 May 2024 (2024-05-23) | 1-4,6,7, 9-13 | |
| A | * paragraph [0084]; figures 1, 4, 6, 8, 10-13 * * paragraph [0089] * * paragraph [0111] - paragraph [0112] * ----- | 5,8 | |
| Y | US 2010/328621 A1 (EGAWA AKIRA [JP] ET AL) 30 December 2010 (2010-12-30) * paragraph [0076] * ----- | 1-4,6,7, 9-13 | TECHNICAL FIELDS SEARCHED (IPC) |
| Y | JP 2003 043446 A (HITACHI LTD) 13 February 2003 (2003-02-13) * paragraph [0007]; figure 2 * * paragraph [0012] * ----- | 1-4,6,7, 9-13 | G03B H04N G02F G02B |

The present search report has been drawn up for all claims

| Place of search | Date of completion of the search | Examiner |
|---|---|---|
| Munich | 23 April 2026 | Orf, Lukas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 26 15 0469

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2026

| Patent document cited in search report | Publication date | Patent family member(s) | | Publication date |
|---|---|---|---|---|
| JP 2010271344 A | 02-12-2010 | NONE | | |
| US 2003147036 A1 | 07-08-2003 | CN | 1398357 A | 19-02-2003 |
| | | EP | 1341028 A1 | 03-09-2003 |
| | | KR | 20020084100 A | 04-11-2002 |
| | | TW | I246631 B | 01-01-2006 |
| | | US | 2003147036 A1 | 07-08-2003 |
| | | WO | 0246834 A1 | 13-06-2002 |
| US 2024168235 A1 | 23-05-2024 | JP | 7619353 B2 | 22-01-2025 |
| | | JP | 2024075308 A | 03-06-2024 |
| | | US | 2024168235 A1 | 23-05-2024 |
| US 2010328621 A1 | 30-12-2010 | CN | 101937137 A | 05-01-2011 |
| | | JP | 5453957 B2 | 26-03-2014 |
| | | JP | 2011013264 A | 20-01-2011 |
| | | US | 2010328621 A1 | 30-12-2010 |
| JP 2003043446 A | 13-02-2003 | NONE | | |

EPO FORM P0459

**REFERENCES CITED IN THE DESCRIPTION**

**Patent documents cited in the description**

- JP 2025003372 A

- JP 2004139018 A